# EUROPÄISCHE PATENTSCHRIFT

(11) **EP 0 727 022 B1**
(45) Veröffentlichungstag und Bekanntmachung des Hinweises auf die Patenterteilung: **10.06.1998**
(21) Anmeldenummer: 94931594.9
(22) Anmeldetag: 09.11.1994
(51) Int. Cl.: F16K 49/00

(54) **GEKÜHLTE SCHIEBERPLATTE**
COOLED GATE VALVE DISK
OPERCULE REFROIDI DE ROBINET-VANNE

(30) Priorität: 10.11.1993 DE 4338431
(43) Veröffentlichungstag der Anmeldung: 21.08.1996
(73) Patentinhaber: Zimmermann & Jansen GmbH, D-52355 Düren (DE)
(72) Erfinder: IRNICH, Franz-Josef, D-52393 Hürtgenwald-Gey (DE); ZOSEL, Dietrich, D-52351 Düren (DE)
(74) Vertreter: Popp, Eugen, Dr.
(86) Internationale Anmeldenummer: EP9403695
(87) Internationale Veröffentlichungsnummer: WO9513493

(56) Entgegenhaltungen:
- EP-A- 0 010 501
- WO-A-93/10388
- DE-A- 2 243 588
- DE-A- 2 322 266
- DE-B- 1 212 378
- FR-A- 2 051 038

## Beschreibung

Die Erfindung betrifft eine gekühlte Schieberplatte, insbesondere eine wassergekühlte Heißwindschieberplatte, gemäß dem Oberbegriff der Ansprüche 1, 7, 9 oder 11.

In der Praxis verbreitet sind Schieberplatten gemäß der DE-C 23 66 032. Diese dienen zum Absperren von Heißgas führenden Rohren, die einen Durchmesser von bis zu etwa zwei Metern und mehr besitzen können.

Üblicherweise umfaßt eine solche bekannte Schieberplatte eine sich über ihren Umfang erstreckende Dichtleiste, die einen radial innerhalb liegenden Schieberplattenteil begrenzt. Gemäß der DE-C 23 66 032 wird dieser Schieberplattenteil mit Hilfe eines Kühlmediums gekühlt. Da im geschlossenen Zustand der Schieberplatte Temperaturen von über 1000 °C über die Schieberplatte abfallen können, ist eine gesonderte Kühlung erforderlich, um wärmebedingte Spannungen und eine dadurch bedingte Durchbiegung der Schieberplatte zu reduzieren.

Konkret umfaßt bei der bekannten Konstruktion der von der Dichtleiste begrenzte Teil der Schieberplatte zwei Platten, die durch spiralförmig ausgebildete Trennwände axial voneinander beabstandet sind. Durch diese Trennwände wird ein durchgehender Strömungskanal von einem am Umfangsrand der Schieberplatte befindlichen Kühlmediumeinlaß zu einem ebenfalls am Umfangsrand angeordneten Auslaß gebildet, wobei das Kühlmedium zunächst spiralförmig nach innen geleitet wird, um dann von dort, nämlich einem im zentralen Bereich der Schieberplatte befindlichen Strömungsumkehrpunkt, wieder spiralförmig nach außen zum Kühlmediumauslaß zu strömen.

Nachteilig bei dieser bekannten Konstruktion ist die aufwendige Herstellung der Schieberplatte. Beispielsweise ist es nur mit verhältnismäßig großem Aufwand möglich, die den doppelspiralförmigen Kühlkanal begrenzenden Trennwände mit beiden Platten zu verschweißen. Darüber hinaus wird bei der bekannten Ausführung eine große Menge Kühlmedium benötigt, um eine ausreichende Kühlung der Schieberplatte zu erhalten. Dementsprechend hoch ist die erforderliche Pumpleistung. Außerdem wird dabei dem Prozeß unnötig viel Wärme entzogen. Besonders nachteilig wirkt sich eine unterschiedliche Kühlung zwischen Schieberplatte und Dichtsitz aus, da hierdurch zusätzliche Spannungen hervorgerufen werden, die sowohl die Funktionssicherheit als auch die Lebensdauer der Schieberplatte mindern können.

Aus der DE-A 22 43 588 ist eine Schieberplatte gemäß dem Oberbegriff des Anspruches 1 bekannt, welche im Vergleich zum Stand der Technik nach der DE-C 23 66 032 konstruktiv erheblich einfacher ist. Andererseits ist die vom Kühlmedium bedeckte Fläche relativ klein, so daß die Schieberplatte gemäß der DE-A 22 43 588 als Hochtemperatur-Absperrorgan nicht oder nur bedingt einsetzbar ist.

Aufgabe der vorliegenden Erfindung ist es, die zuletzt genannte Schieberplatte derart weiterzubilden, daß sie unter Beibehaltung einer einfachen und kostengünstigen Herstellung als Hochtemperatur-Absperrorgan einsetzbar ist.

Diese Aufgabe wird alternativ durch die Merkmale der kennzeichnenden Teile der Ansprüche 1, 7, 9 oder 11 gelöst.

Die erfindungsgemäße Schieberplatte gemäß Patentanspruch 1 ist einfach und kostengünstig herstellbar, da lediglich ein einfaches Rohr doppelspiralförmig gebogen werden muß. Ferner kann durch Wahl eines bestimmten Innendurchmessers oder einer bestimmten Wandstärke auf individuelle Kühl- oder Stabilitätsbedürfnisse der Schieberplatte abgestellt werden.

Erfindungsgemäß liegen die benachbarten Rohrabschnitte des doppelspiralförmig gebogenen Rohres mit Ausnahme eines zentralen, den Strömungsumkehrbereich bildenden Rohrteils aneinander an, so daß eine ebenfalls doppelspiralförmige Berührungslinie gebildet wird. Im Bereich der Berührungslinie sind die aneinanderliegenden Rohrabschnitte vorzugsweise miteinander verbunden, so daß ein besonders formstabiles Plattenelement entsteht. Als Verbindung eignet sich insbesondere eine Verschweißung, die an den leicht zugänglichen Stellen der Berührungslinie einfach durchzuführen ist.

Die Strömungsumkehr erfolgt - wie bereits vorgenannt angedeutet - im zentralen Plattenbereich durch einen S-förmig gebogenen Rohrabschnitt, der mit dem doppelspiralförmig gebogenen Rohr einstöckig ausgebildet ist und eine Fluidverbindung zwischen beiden spiralförmig ausgebildeten Rohrteilen herstellt.

Der zentrale Strömungsumkehrbereich weist zwischen dem S-förmig gebogenen Rohrabschnitt und den angrenzenden Spiralrohrabschnitten einen Raum auf, der nicht vom im Rohr fließenden Kühlmedium gekühlt wird. Zur Kühlung dieses Raumes werden vorzugsweise im Bereich der beiden Außenflächen axial voneinander beabstandete Bleche derart angeordnet, daß sie zusammen mit den angrenzenden Spiralrohrabschnitten diesen Raum abgrenzen. Über Ein- und Austrittsöffnungen im S-förmig gebogenen Rohrabschnitt kann dann das Kühlmedium aus dem Rohr in und aus diesen Raum ein- bzw. wieder ausgeleitet werden.

Insbesondere ist es möglich, den durch die beiden Bleche begrenzten Raum durch ein Zwischenblech abzuteilen, so daß Teilräume entstehen, die jeweils vom Kühlmedium zwangsdurchströmt werden.

Zur Verbesserung der Durchströmung des von den Blechen abgegrenzten Raumes ist es möglich, daß der Durchgang des S-förmig gebogenen Rohres zwischen Ein- und Austrittsöffnungen gedrosselt oder vollständig unterbrochen ist. Alternativ kann ein Stück aus dem S-förmig gebogenen Rohr herausgenommen werden.

Gemäß der zweiten Alternative einer erfindungsgemäßen gekühlten Schieberplatte nach Anspruch 7 wird der doppelsprialförmig geformte Kühlkanal dadurch gebildet, daß eine in einer Basisplatte doppelspiralförmig ausgebildete Nut mit einer Deckplatte verschlossen wird. Die Strömungsumkehr findet wiederum in zentralen Bereich der Schieberplatte statt, wobei herstellungstechnisch der Krümmungsradius des S-förmig geformten Nutabschnittes nicht wie beim Rohr materialbedingt begrenzt ist. Zur Zu- und Abfuhr des Kühlmediums muß die axial verschlossene Nut jeweils endseitig mit einem Kühlmittelein- bzw. -auslaß verbunden werden. Auch diese Alternative bietet eine preiswerte Möglichkeit, eine gekühlte Schieberplatte mit gewünschter Durchflußfläche einfach herzustellen.

Eine besonders einfache und schnelle Möglichkeit zur Aufbringung der Deckplatte auf die Basisplatte ist durch "Aufsprengen" derselben gegeben.

Bei einer dritten Alternative nach Anspruch 9 wird der Kühlkanal zwischen einer Trägerplatte und einem Blech gebildet, die den von der Dichtleiste umgrenzten Schieberplattenteil bilden. Das Blech weist eine doppelspiral- oder doppelmäanderförmige Verformung unter Ausbildung eines entsprechenden Kanals auf. Die im Blech gebildete Verformung kann vor (z.B. durch Prägen), beim (z.B. durch Explosionsverformung) oder nach dem Aufbringen (z.B. durch hydraulisches Aufblähen) des Bleches auf die Trägerplatte ausgebildet werden. Da Blech besonders einfach formbar und bearbeitbar ist, stellt die vorgenannte Möglichkeit eine besonders preiswerte Herstellungsalternative für einen Kühlkanal in bzw. an einer Schieberplatte dar, wobei die Kühlkanalmaße durch Wahl der Ausnehmungsmaße bestimmbar sind.

Das Blech wird vorzugsweise auf die Trägerplatte "aufgesprengt" (Explosionsverformung mit Flächenkontakt) oder durch Rollschweißung (mit Linienkontakt) mit dieser fluiddicht verbunden. Mit beiden Verfahren wird eine schnelle und feste Verbindung beider zu verbindenden Teile unter Ausbildung eines nach außen hin dichten Kühlkanals erhalten.

Eine besonders einfache Alternative einer gekühlten Schieberplatte ist im Anspruch 11 angegeben. Dabei sind in einer Kernplatte Bohrungen vorgesehen, die sich unter Ausbildung eines vorzugsweise mäanderförmigen Kühlkanals schneiden und miteinander fluidverbunden sind.

Zur Ausbildung eines gewünschten Strömungsverlaufs sind in den Bohrungen Schließpfropfen einsetzbar. Eine besonders einfache Möglichkeit hierzu bietet sich durch in der Kernplatte vorgesehene Axialbohrungen an, die im Bereich der abzuschließenden Bohrungen angeordnet und in die die Schließpfropfen einzusetzen sind. Außenseitig werden die den Kühlkanal bildenden Bohrungen - abgesehen von einem Kühlmediumeinlaß bzw. -auslaß - durch Pfropfen oder dgl. Sperrelemente abgedichtet. Auch die umfangsmäßig die Schieberplatte umgebende, insbesondere aufgeschweißte Dichtleiste kann zum radialen Abschluß der Bohrungen verwendet werden.

Auch eine nach der vierten Alternative ausgebildete Schieberplatte ist kostengünstig und einfach herstellbar, wobei durch die Wahl der Rasterung und der Bohrdurchmesser eine Abstimmung auf die für die jeweilige Platte benötigten Kühlerfordernisse durchführbar ist.

Für eine minimale Kühlung mit einer geringen Kühlleistung muß die Isolierung der Schieberplatte möglichst optimal sein. Es wird daher vorgeschlagen, die wärmedämmende Verkleidung auf beiden Seiten sowie umfangsmäßig jeweils zweischichtig auszubilden, nämlich aus einer inneren, insbesondere einer "Mikrotherm" (Warenzeichen)-Isolierung (mikroporöse Keramikmatte mit einer Wärmeleitzahl lambda = 0,02W/mK bei 20°C) und einer äußeren Isolierung, die insbesondere aus einer Keramikfaserschaum- oder Feuerbetonplatte besteht.

Da eine Durchbiegung der Schieberplatte und/oder Wärmespannungen trotz der Kühlung nicht vollständig auszuschließen sind, wird die äußere Isolierung vorzugsweise mit einem radialen und axialen Spiel angeordnet, so daß sie bei einer Durchbiegung oder Ausdehung der Platte noch genügend Spielraum besitzt und nicht durch auf sie einwirkende Kräfte beschädigt werden kann. Eine derartige Beschädigung ist in jedem Fall zu vermeiden, da beim Bruch der äußeren Isolierung die heißen Gase direkt mit der inneren Isolierung oder dem zentralen und gekühlten Teil der Schieberplatte in Kontakt kommen. Dadurch könnte zum einen die innere Isolierung beeinträchtigt werden (z.B. durch Ab- oder Anschmelzen der Isolierung) bzw. die Kühlung der Schieberplatte nicht mehr ausreichend sein.

Die Isolierung bzw. Isolierungen werden vorzugsweise durch rasterartig an der Schieberplatte angeordnete, insbesondere angeschweißte Haltebolzen oder -stifte gehalten.

Um die radiale und axiale Beweglichkeit der äußeren Isolierung sicherzustellen, können die Haltebolzen oder -stifte mit einer Beschichtung versehen sein, die bei hohen Temperaturen - also bei der ersten Benutzung - abbrennt, so daß dann ein Dehnungsspalt zwischen Isolierung und Bolzen bzw. Stift entsteht.

Eine alternative Möglichkeit zur Befestigung der äußeren Isolierung besteht darin, aus Isoliermaterial, insbesondere Keramikmaterial, bestehende Spannelemente, insbesondere Spannseile, vorzusehen, die in der äußeren Isolierung angeordnet und über Ringe bzw. Ösen geführt sind, so daß die Isolierung radial und/ oder tangential vorgespannt ist. Vorzugsweise sind die Spannelemente nach Art eines Gitterfensters im Inneren der äußeren Isolierung eingebettet und erstrecken sich in zwei Richtungen senkrecht zueinander, insbesondere netz- oder jeweils mäanderförmig. Ein Spielraum für die äußere Isolierung in axialer und radialer Richtung kann somit gewährleistet werden, ohne daß Wärmebrücken zwischen der Umgebung und dem gekühlten Teil der Schieberplatte entstehen.

Gemäß einer weiteren vorteilhaften Ausführungsform ist innerhalb eines sich über den äußeren Umfang der Schieberplatte erstreckenden Isolierringes ein Spannseil vorgesehen, das ebenfalls aus Isoliermaterial, insbesondere aus Keramikmaterial, besteht, und über etwa im gleichen Winkelabstand voneinander angeordnete Ring- oder Y-Anker gespannt wird, so daß die äußere Isolierung radial zusammengehalten ist.

Die Erfindung wird nachstehend, auch hinsichtlich weiterer Merkmale und Vorteile, anhand der Beschreibung von Ausführungsbeispielen und unter Bezugnahme auf die beiligenden Zeichnungen näher erläutert. Die Zeichnungen zeigen in
- Fig. 1: eine schematische Seitenansicht des tragenden Teils einer ersten Ausführungsform einer kühlbaren Schieberplatte,
- Fig. 2: eine schematische Schnittdarstellung entlang der Linie II-II aus Fig. 1, wobei im oberen Teil der Darstellung Schieberplattenisolierungen gezeigt sind,
- Fig. 3a bis 3d: vergrößerte Detailschnittansichten von verschiedenen Konstruktionsalternativen für den Ausschnitt III aus Fig. 2, wobei insbesondere die Anordnung und Ausbildung der Dichtleiste im Detail gezeigt ist,
- Fig. 4a und 4b: vergrößerte Detailschnittansichten von verschiedenen Konstruktionsalternativen für den Ausschnitt IV aus Fig. 2, wobei insbesondere der Zentralbereich der Schieberplatte gezeigt ist,
- Fig. 5a und 5b: vergrößerte Detailschnittansichten, die Befestigungsmöglichkeiten der Isolierungen an der gemäß der ersten Ausführungsform hergestellten Schieberplatte zeigen,
- Fig. 6: eine vergrößerte Detailschnittansicht entlang der Linie VI-VI aus Fig. 1,
- Fig. 7: eine schematische Seitenansicht des tragenden Teils einer zweiten Ausführungsform einer kühlbaren Schieberplatte,
- Fig. 8: eine Schnittansicht entlang Linie VIII-VIII aus Fig. 7, wobei die auf der Basisplatte aufgebrachte Deckplatte sowie im oberen Teil der Darstellung Isolierungen gezeigt sind,
- Fig. 9: eine schematische Seitenansicht des tragenden Teils einer dritten Ausführungsform einer kühlbaren Schieberplatte,
- Fig. 10: eine schematische Schnittansicht entlang Linie X-X aus Fig. 1, wobei auch die Schieberplattenisolierung dargestellt ist,
- Fig. 11: eine vergrößerte Detailansicht des Ausschnitts XI aus Fig. 10, wobei eine Befestigungsmöglichkeit der Schieberplattenisolierung dargestellt ist,
- Fig. 12: eine vergrößerte Detailansicht aus Fig. 9, jedoch ohne die die Schieberplatte umfangsmäßig umgebende Dichtleiste sowie radiale Isolierung,
- Fig. 13a: eine Schnittansicht entlang Linie XIIIa-XIIIa aus Fig. 12 ohne Isolierungen,
- Fig. 13b: eine vergrößerte Darstellung eines Kühlmittelauslaßdurchganges,
- Fig. 14: eine schematische Seitenansicht des tragenden Teils einer vierten Ausführungsform einer kühlbaren Schieberplatte, wobei in einer Kernplatte angeordneten Bohrungen gestrichelt dargestellt sind,
- Fig. 15: eine Schnittansicht entlang Linie XV-XV aus Fig. 14 mit Schieberplattenisolierung,
- Fig. 16: eine vergrößerte Darstellung des Ausschnitts XVI aus Fig. 15, wobei eine Befestigungsmöglichkeit der Schieberplattenisolierungen dargestellt ist,
- Fig. 17: eine schematische Seitenansicht einer kühlbaren Schieberplatte wie Fig. 14, jedoch mit der Darstellung der Führung eines Spannseiles, das in der äuße-ren Isolierung vorgesehen ist,
- Fig. 18: eine vergrößerte Darstellung eines Ringstiftes, der zum Umlenken und Spannen des Spannseils an der Schieberplatte angeordnet ist,
- Fig. 19a und 19b: schematische und vergrößerte Teilschnittdarstellungen, die ein Aufbringverfahren des Bleches auf die Trägerplatte zur Ausbildung eines Kühlkanals zeigen, und
- Fig. 20a und 20b: schematische und vergrößerte Teilschnittdarstellungen, die ein weiteres Aufbringverfahren des Bleches auf die Trägerplatte zeigen.

Nachfolgend bezeichnen die gleichen Bezugsziffern gleiche oder entsprechende Teile.

Die in den Figuren gezeigte Schieberplatte 10 ist beim Betrieb in einem nicht dargestellten Schieberplattengehäuse angeordnet, wobei ein Durchgang im Schieberplattengehäuse im geöffneten Zustand der Schieberplatte freigegeben und im geschlossenen Zustand versperrt ist. Dabei liegt eine später noch zu beschreibende, die Schieberplatte 10 radial außen umgebende Dichtleiste bzw. eine Fläche derselben an einem Dichtsitz des Gehäuses an, so daß der abzusperrende Durchgang im Schieberplattengehäuse bei geschlossener Schieberplatte dicht abgeschlossen ist. Alternativ können auch zwei sich gegenüberliegende Fläche der Dichtleiste zur Abdichtung mit im Schieberplattengehäuse vorgesehenen Dichtsitzen dienen.

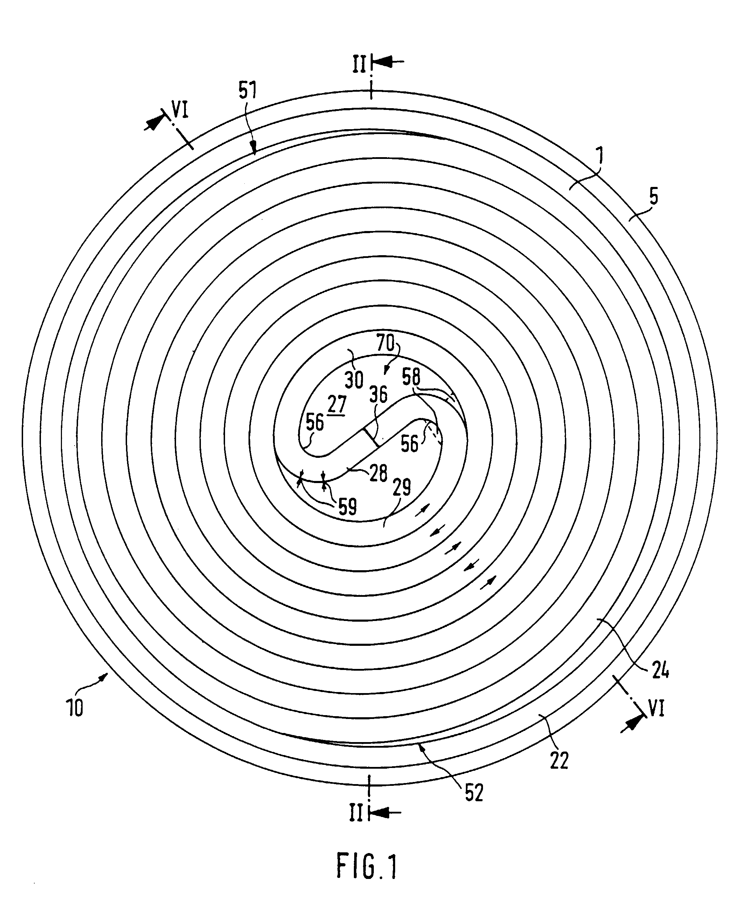

In den Figuren 1 bis 6 ist eine erste Ausführungsform einer gekühlten Schieberplatte 10 in verschiedenen Varianten dargestellt.

Die Schieberplatte 10 weist eine metallische Tragkonstruktion auf, die eine sich über den Plattenumfang erstreckende, ringförmige Dichtleiste 1 umfaßt, welche eine Schieberplattenscheibe begrenzt. Diese Schieberplattenscheibe ist - wie in Fig. 1 dargestellt ist - aus einem doppelspiralförmig gebogenen Rohr 24 gebildet. Das im Ausgangszustand als gerades Rohr vorliegende Rohr 24 wird im warmen Zustand gebogen.

Das doppelspiralförmig gebogene Rohr 24 ist in Schieberplattenebene angeordnet und derart gebogen, daß die nebeneinander liegenden Rohrabschnitte aneinander stoßen, so daß eine ebenfalls doppelspiralförmige Berührungslinie gebildet ist (siehe Fig. 1).

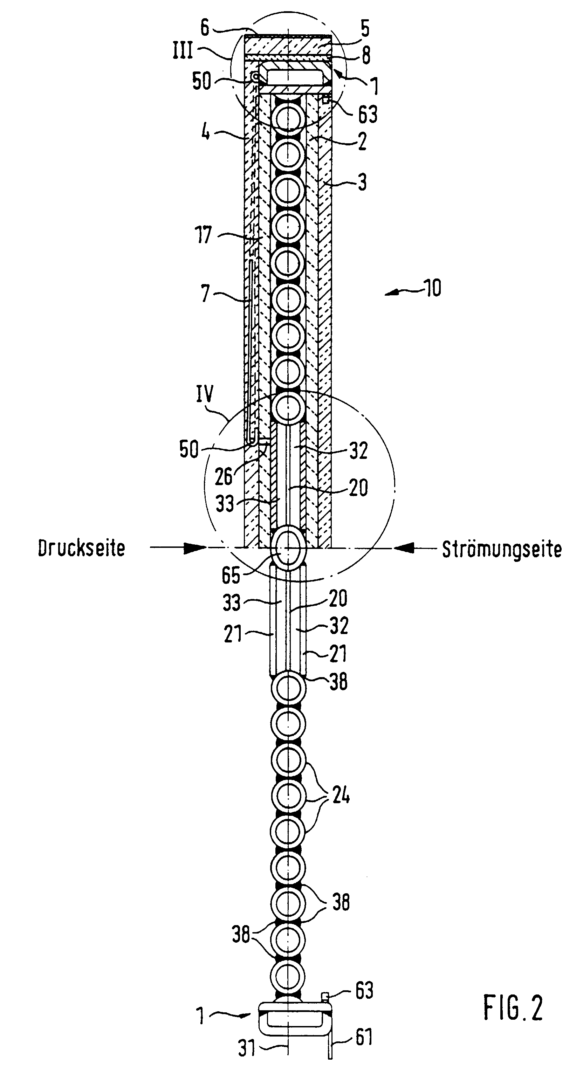

Aus dem Schnittbild der Fig. 2 ist zu erkennen, daß die nebeneinander liegenden Rohrabschnitte der Spiralabschnitten 29 und 30 jeweils miteinander verschweißt sind (siehe Schweißnähte 38). Dadurch wird einerseits ein besonders formstabiles und andererseits ein ausreichend biegeelastisches Plattenteil gebildet. Die derart ausgebildete Schieberplatte kann sich bei üblichen Differenzdrücken problemlos dem verformten Sitzprofil des Schieberplattengehäuses anpassen.

In einem zentralen Teil der Schieberplatte ist das Rohr 24 S-förmig gebogen, wobei die beiden Spiralrohrabschnitte 29 und 30 durch einen S-förmig gebogenen Rohrabschnitt 28 miteinander verbunden sind. Durch den S-förmigen Rohrabschnitt 28 wird ein Strömungs-umkehrbereich 27 definiert, in dem das das Rohr 24 durchströmende Kühlmedium seine Strömungs-Umlaufrichtung ändert.

Die Dimension des S-förmigen Rohrabschnitts 28 ist begrenzt durch einen technologisch bedingten minimalen Biegeradius 56, der material- sowie von der notwendigen Wandstärke des Kühlrohres abhängig ist. Zwischen dem S-förmigen Rohrabschnitt 28 und den angrenzenden Spiralrohrabschnitten 29 und 30 sind dementsprechend rohrfreie Räume 70 gebildet.

Um die Schieberplatte 10 in diesem Bereich dennoch kühlen zu können, sind, wie in den Figuren 2, 4a, 4b und 6 dargestellt ist, jeweils zwei axial voneinander beabstandete, im Bereich der beiden Außenflächen der Schieberplatte 10 liegende Bleche sowohl am S-förmig gebogenen Rohrabschnitt 28 als auch an den daran angrenzenden Spiralrohrabschnitten 29 und 30 angeschweißt. Durch die Bleche 21, den S-förmigen Rohrabschnitt 28 sowie die angrenzenden Spiralrohrabschnitte 29 und 30 wird ein abgeschlossener Raum 70 gebildet. Aus Ein- 34 und Austrittsöffnungen 35 kann das Kühlmedium aus dem S-förmigen Rohrabschnitt 28 in den abgeschlossenen Raum 70 ein- bzw. aus diesem wieder austreten, so daß auch in diesem Bereich eine Kühlung stattfindet.

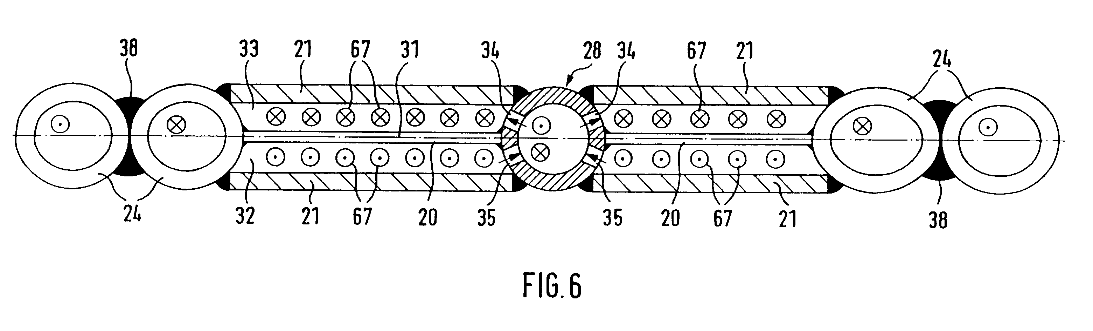

Gemäß den Figuren 2, 4a, 4b und 6 ist zwischen den beiden Blechen 21 jeweils ein Zwischenblech 20 angeordnet, das den abgeschlossenen Raum 70 in zwei Teilräume 32 und 33 aufteilt. Die einzelnen Teilräume 32, 33 werden von dem Kühlmedium in der Weise durchströmt, wie in Fig. 6 dargestellt ist. Dabei bezeichnet die Bezugsziffer 67 die Strömungsrichtung des Kühlmediums. Die einge-kreisten Punkte stellen eine Strömungsrichtung aus der Zeichenebene heraus und die eingekreisten Kreuze eine Strömungsrichtung in die Zeichenebene hinein dar. Im Zwischenblech 20 können im übrigen Bohrungen (nicht dargestellt) ausgebildet sein, so daß das Kühlmedium von einem zum anderen Teilraum strömen kann.

Um eine bessere Durchströmung des von den Blechen 21 abgegrenzten Raumes 70 bzw. der einzelnen Teilräume 32 und 33 mit dem Kühlmedium zu erhalten, kann der Querschnitt des Rohres 24 im S-förmigen Rohrabschnitt 28 zwischen den Ein- 34 und Austrittsöffnungen 35 reduziert und die Durchströmung entsprechend gedrosselt werden (siehe Bezugsziffer 65 in Fig. 2). Die Drossel ist dabei etwas längsversetzt von der geometrischen Mitte der Spirale angeordnet.

Im Extremfall ist es auch möglich, den Durchgang zwischen den Ein- 34 und Austrittsöffnungen 35 vollständig zu unterbrechen. Damit wird das Kühlmedium vollständig durch den Raum 70 bzw. die Teilräume 32 und 33 strömen. Alternativ ist es auch möglich das gerade Mittelteil der Doppelspirale herauszutrennen und eine freie Strömung zwischen den beiden Blechen 21 - ohne Zwischenblech 20 - zuzulassen. Die Ein- und Ausströmbereiche sind in Fig. 1 durch die Bezugszahlen 58 und 59 bezeichnet.

In den Figuren 1 bis 6 ist kein Kühlmediumein- bzw. -auslaß dargestellt, durch den die Zu- und Abfuhr des Kühlmediums erfolgt. Dazu wird auf die nachfolgenden Ausführungsbeispiele verwiesen.

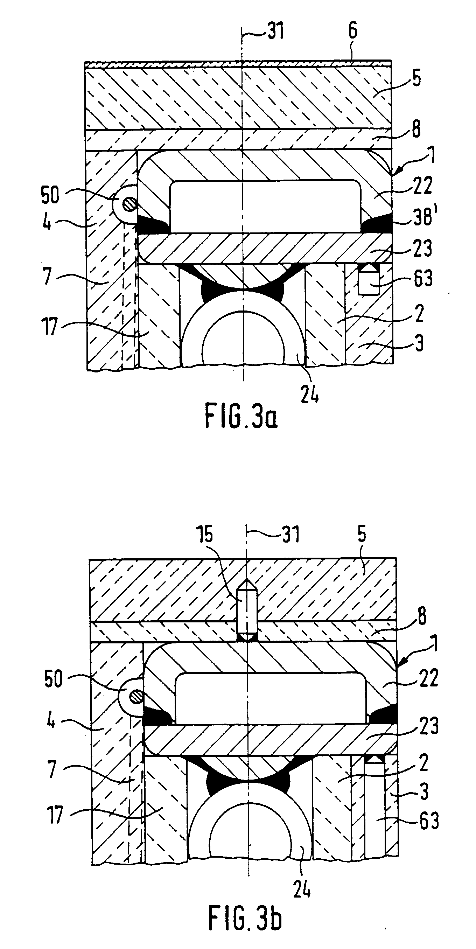

Die den durch das Rohr 24 gebildeten Schieberplattenteil umgebende Dichtleiste 1 ist, wie insbesondere aus den Figuren 3a bis 3d ersichtlich ist, aus einem U-Profilring 22 und einem radial innerhalb angeordneten Flachbandring 23 gebildet, die miteinander verschweißt sind (Schweißnähte 38'). Gemäß den Figuren 3a bis 3c ist der U-Profilring 22 auf den Ring 23 radial aufgesetzt. Damit sind die Schweißnähte 38' axial anzuordnen.

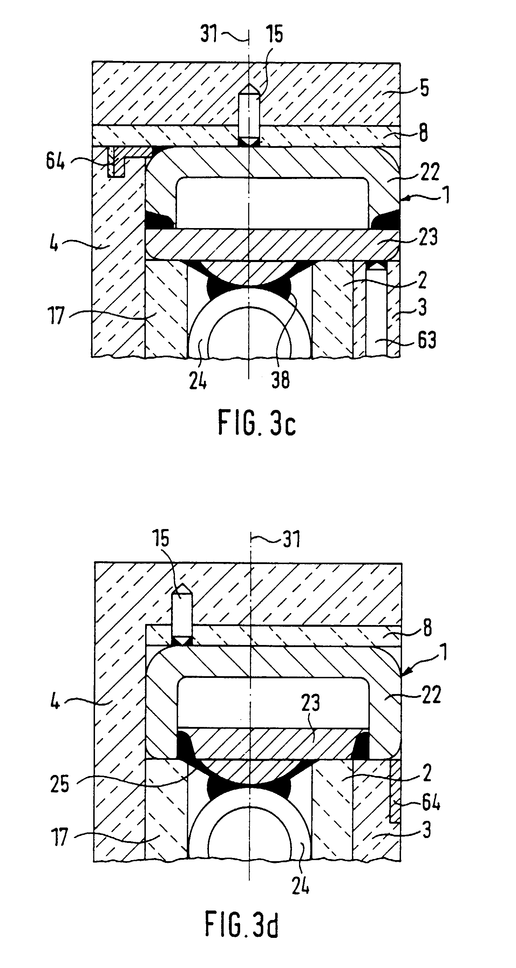

Da die Dichtleiste 1 mit einem Schenkel des U-Profilrings 22 am eingangs erwähnten Dichtsitz des Schieberplattengehäuses anliegt, ist es vorteilhaft, eine Schweißnahtkonfiguration zu wählen, bei der die Schweißnaht nicht in der Anlagefläche angeordnet ist. Des weiteren ist darauf zu achten, daß die Schweißnaht außerhalb der Hauptspannungszone zwischen gekühltem Dichtsitz und der heißen Umgebung bei geöffneter Schieberplatte liegt. Eine Möglichkeit dafür ist in Fig. 3d zu erkennen, gemäß der der Flachbandring 23 zwischen den Schenkeln des U-Profilrings 22 angeordnet und verschweißt ist.

Durch das Zusammenfügen des U-Profilrings 22 und des Flachbandrings 23 wird in der Dichtleiste 1 ein Ringhohlraum ausgebildet, durch den ebenfalls Kühlmedium zur Kühlung geleitet wird. Dabei entspricht der Strömungsquerschnitt des Ringhohlraumes demjenigen des Kühlkanals der Schieberplatte, so daß Spannungen aufgrund einer unterschiedlichen Kühlung von Dichtring und übriger Schieberplatte vermieden werden.

Die Dichtleiste 1 ist außermittig, in Richtung zur Strömungsseite (in den Figuren jeweils die rechte Seite) hin verschoben am durch das Doppelspiral-Rohr 24 gebildeten Schieberplattenteil angeschweißt (siehe Fig. 2).

Der aus dem Doppelspiral-Rohr 24 sowie der Dichtleiste 1 bestehende tragende Teil der Schieberplatte 10 ist bis auf den am Dichtsitz des Schieberplattengehäuses anliegenden Teil der Dichtleiste 1 vollständig isoliert. Die wärmedämmende Verkleidung der Schieberplatte 10 ist zweischichtig aufgebaut und besteht auf beiden Schieberplattenseiten sowie umfangsmäßig aus einer inneren und einer äußeren Isolierung.

Die inneren Isolierungen 2 und 17 auf beiden Seiten der Schieberplatte, die sich radial innerhalb über den gesamten vom doppelspiralförmig gebogenen Rohr 24 gebildeten Plattenteil erstrecken, sowie die innere Isolierung 8, die die Dichtleiste 1 umfangsmäßig umgibt, bestehen aus Mikrothermmaterial, wobei es sich bei "Mikrotherm" um ein eingetragenes Warenzeichen handelt und das Material im Handel erhältlich ist.

Die radial und axial außerhalb der inneren Isolierungen angeordneten äußeren Isolierungen, nämlich die Isolierungen 3 und 4 beider Schieberplattenseiten sowie die umfangsmäßig äußere Isolierung 6, bestehen aus einer Keramikfaserschaumplatte, die die Oberflächentemperatur der Mikrothermisolierung in Medienrichtung unter 1100°C und somit unter deren Höchstbelastung hält. Die Keramikfaserschaumplatten können sich in bestimmten Grenzen frei radial und axial dehnen und haben soviel Abstand zur Mikrothermisolierung, daß die maximale elastischen Durchbiegung der metallischen Stützkonstruktion kompensiert werden kann. Eine Reihe von Befestigungsmöglichkeiten für eine freie radiale Ausdehnung der äußeren Isolierungen 3, 4 und 5 wird nachfolgend noch beschrieben.

Die äußere Isolierung 3 auf der Strömungsseite der Schieberplatte 10 erstreckt sich wie schon die strömungsseitige innere Isolierung 2 radial innerhalb der Dichtleiste 1 über die gesamte Schieberplatte 10 hinweg. Auf der gegenüberliegenden Druckseite (in den Figuren die linke Seite) erstreckt sich die äußere Isolierung 4 in radialer Richtung über die Dichtleiste 1 hinaus und stößt an die die Dichtleiste 1 umgebende innere Isolierung 8 an. Insgesamt wird durch die äußeren Isolierungen 3, 4 und 5 sowie einem Dichtlei-stenteil ein rechteckförmiger Querschitt definiert.

Im folgenden wird auf die Befestigung der einzelnen Isolierungen eingegangen. Gemäß Fig. 3a umgibt ein Keramikfasergewebe 6 radial die äußere umfangsmäßige Isolierung 5 und hält die bündig mit der Dichtleiste 1 bzw. der äußeren Isolierung 4 abschließende Isolierung 5 auf der Dichtleiste 1. Alternativ kann anstelle des Keramikfasergewebes 6 auch eine Keramikdichtungsmatte (Typ Interam) verwendet werden, die beim ersten Erreichen einer Grenztemperatur eine radiale Ausdehnung erfährt. Damit wird eine Pressung erzeugt, die den radialen Abstand konstant hält.

Alternativ ist es auch möglich die radial äußere Isolierung 5 mit "Hexmesh" (eingetragenes Warenzeichen) auf der Dichtleiste 1 zu befestigen.

Gemäß Fig. 3b sind am äußeren Umfang der Dichtleiste 1 in etwa gleichmäßigem Winkelabstand radial nach außen vorstehende Haltestifte 15 angeschweißt. Diese Haltestifte 15 erstrecken sich vollständig durch die innere Isolierung 8 hindurch und tauchen in die äußere Isolierung 5 hinein. Sie verhindern eine axiale sowie eine tangentiale Verschiebung der Isolierungen 5 und 8.

In den Figuren 3a und 3b bzw. 2 und 4a wird die druckseitige äußere Isolierung 4 durch ein im Inneren dieser Isolierung angeordnetes, insbesondere eingegossenes Spannseil 7 gehalten, das in Ösen beziehungsweise Ringstiften 50 gehalten und geführt ist, welche an der Dichtleiste 1, am Rohr 24 und/oder den Blechen 21 angeschweißt sind. Das Spannseil 7 spannt die äußeren Isolierung 4 radial und tangential vor. Ein axiales und radiales Spiel der Isolierung läßt das Spannseil 7 jedoch zu. Insbesondere werden durch Verwendung eines derartigen, im Inneren der äußeren Isolierung 4 befindlichen Spannseils 7 keine Wärmebrücken zwischen der Umgebung der Schieberplatte 10 und dem gekühlten Teil derselben ausgebil-det, so daß die Isolierung über die gesamte Schieberplatte 10 voll wirksam ist.

Eine weitere Befestigungsalternative für die druckseitig angeordnete äußere Isolierung 4 ist in Fig. 3c dargestellt. Dafür werden an die Dichtleiste 1 entweder in etwa gleichmäßig winkelverteilte Haken oder ein Winkelprofilring angeschweißt, wobei jeweils ein Schenkel axial nach außen und der zweite Schenkel vom äußeren Ende des axial nach außen stehenden Teils radial nach innen zeigt. Dieser zweite Schenkel tritt in eine am Außenumfang der äußeren Isolierung 4 vorgesehene Nut ein, so daß diese in Axialrichtung gehalten ist. Dabei kann durch die Dimensionierung der in der äuße-ren Isolierung 4 vorgesehenen Nut ein Spielraum vorgesehen sein, so daß sowohl eine radiale als auch eine axiale Bewegung der äuße-ren Isolierung 4 in gewissen Grenzen möglich ist.

Gemäß der Fig. 3d ist druckseitig die äußere Isolierung 4 einstückig mit der umfangsmäßig angeordneten äußeren Isolierung 5 verbunden, wobei analog zu Fig. 3b bzw. 3c an der Dichtleiste 1 radial außen umfangsmäßig beabstandete Haltestifte 15 angeordnet sind, die sich durch die innere Isolierung 8 hindurch sowie zum Teil in die einstückig ausgebildete Isolierung 4 hinein erstrecken und ebenfalls eine axiale sowie tangentiale Verschiebung der Isolierung 4 verhindern. Aus symmetrischen Gründen sind die Haltestifte 15 bei dieser Alternative nicht in der Mittenebene 31, sondern druckseitig versetzt dazu angeordnet.

Die Befestigungsmöglichkeiten für die Isolierungen in den Fig. 3a bis 3d gestatten eine freie radiale Ausdehnung der Isolationselemente.

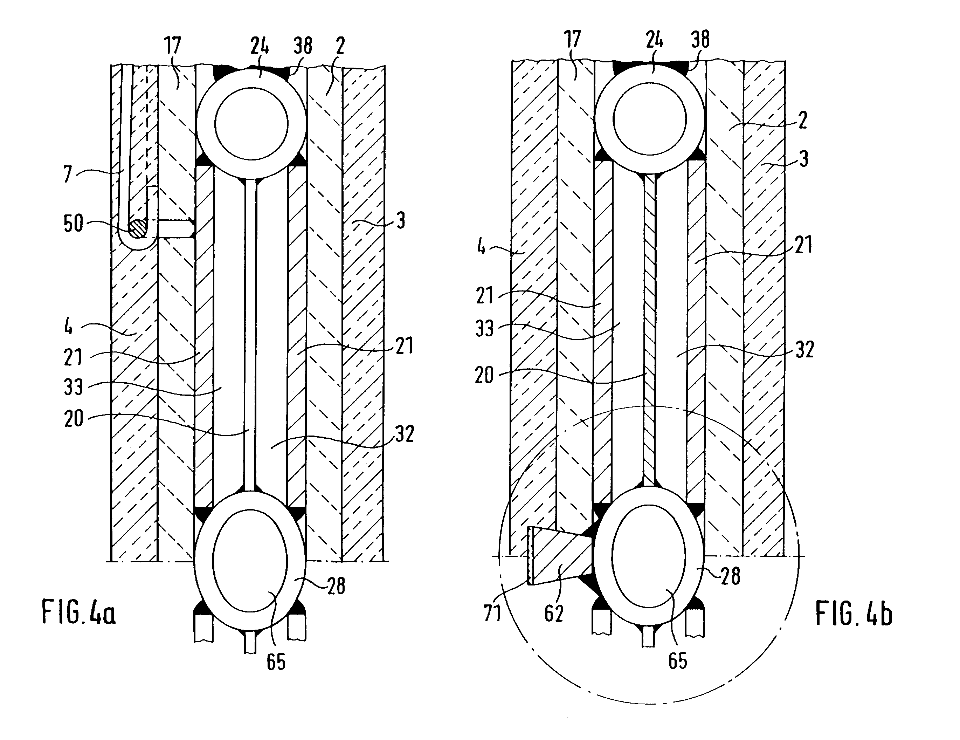

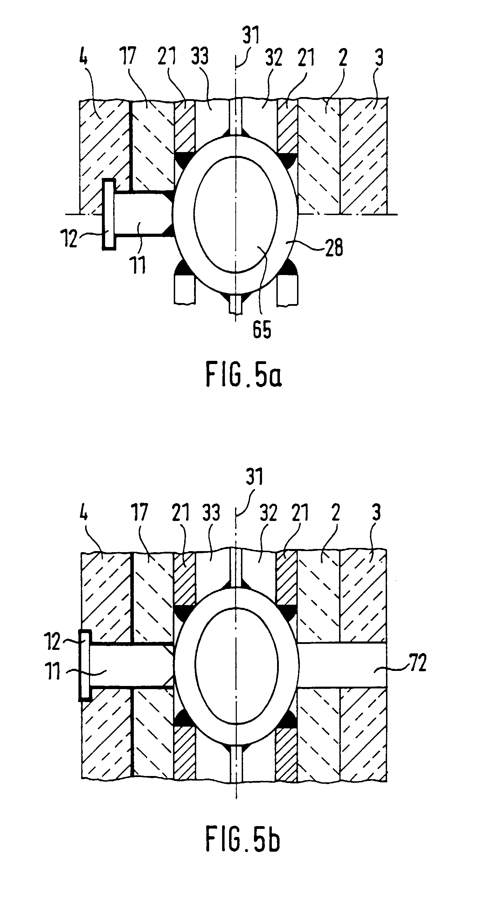

In den Figuren 4b, 5a und 5b sind weitere Befestigungsmöglichkeiten für die inneren und äußeren Isolierungen dargestellt.

Gemäß Fig. 4b ist mittig an dem durch das doppelspiralförmig gebogene Rohr 24 gebildeten Schieberplattenteil ein Halteblech 62 angeschweißt, das sich konisch nach außen erweitert, sich durch die innere Isolierung 17 hindurch erstreckt und in der äußeren Isolierung 4 verankert ist. Durch die konische, sich nach außen erweiternde Form des Halteblechs 62 und eine korrespondierend dazu ausgebildete Ausnehmung in der äußeren Isolierung 4 wird diese zentriert an der Schieberplatte 10 gehalten. Durch einen Spalt, der durch Abbrennen einer Beschichtung 78 entsteht, zwischen der äußeren Isolierung 4 bzw. 3 und dem äußeren Teil bzw. der äußeren Stirnseite des Halteblechs 62 wird auch eine axiale und radiale Bewegungsmöglichkeit der äußeren Isolierung relativ zur inneren Isolierung und/oder dem zentralen Plattenteil erhalten. Der erwähnte Spalt kann auch durch eine elastische Füllung 71 ersetzt sein, die hochtemperaturbeständig ist.

Gemäß den Figuren 5a und 5b sind am Rohr 24 bzw. am S-förmigen Rohrabschnitt 28 sich senkrecht zur Schieberplattenebene erstreckende Haltebolzen 11 angeordnet, die einen Kopf 12 mit größerem Durchmesser aufweisen. Erstreckt sich bei der Ausführung in Fig. 5b der Haltebolzen 11 durch die innere Isolierung 17 hindurch noch bis zur Außenfläche der äußeren Isolierung 4, so ist der Haltebolzen 11 bzw. dessen Kopf 12 beim Beispiel in Fig. 5a im Inneren der äußeren Isolierung 4 aufgenommen. Bei der Variante nach Fig. 5a werden somit keine Wärmebrücken ausgebildet.

Die axiale und radiale Beweglichkeit der äußeren Isolierungen 3 und 4 gegenüber den Haltebolzen 11 wird dadurch erreicht, daß auf den Bolzen eine abbrennbare Schicht aufgebracht ist - dargestellt durch die dicke Linie - (beispielsweise Kunststoff, Farbe, Bitum oder dgl.), welche beim ersten Einsatz der Schieberplatte abbrennt, so daß ein Dehnungsspalt zwischen der jeweiligen Isolierung und dem Haltebolzen 11 bzw. dessen Kopf 12 ausgebildet wird.

Der Haltebolzen 11 kann natürlich auch derart ausgebildet sein, daß eine Schraube am Rohr 24 oder einem anderen tragenden Schieberplattenteil angeschweißt ist, auf der eine Haltemutter auf-schraubbar ist.

Die strömungsseitige, äußere Isolierung 3 kann, wie in den Figuren 3a bis 3c dargestellt ist, durch radial innen an der Dichtleiste angeschweißte und sich radial nach innen erstreckende Halteelemente 62, nämlich Haltestifte oder Ringscheiben, gehalten werden, die in korrespondierende Öffnungen der strömungsseitigen, äußeren Isolierung 3 eintreten.

In Fig. 3d wird die äußere Isolierung 3 durch einen an der Dichtleiste 1 angeschweißten und bündig mit dieser abschließenden Ring 64 begrenzt, der die äußere Isolierung 3 axial, insbesondere mit Spiel, hält.

Die jeweils inneren Isolierungen 2, 8 und 17 werden im wesentlichen nur durch die äußeren Isolierungen gehalten.

Wichtig ist es in jedem Fall, Kräfte, insbesondere Druckkräfte auf die äußeren Isolierungen 3 und 4 zu vermeiden. Dafür helfen neben den bereits erwähnten, auf Haltestiften oder -bolzen aufgebrachten und nach einer ersten Benutzung abbrennbaren Legierungen auch herstellungsbedingte Schrumpfspalte und/oder ein oder mehr Druckausgleichsbohrungen 72, wie in Fig. 5b dargestellt ist. Die Beweglichkeit in axialer und radialer Richtung der äußeren Isolierung ist dabei derart ausgestaltet, daß die Differenz des Ausdehnungskoeffizienten zwischen Stahl und Isolationsmaterial kompensiert wird. Die erwähnten Schrumpfspalte definieren im übrigen wärmeisolierende Luftschichten, wodurch der Gesamtisolationsgrad zusätzlich erhöht wird.

Da die Schieberplatte im geschlossen Zustand nur Nebenwirbeln aus der Heißwindleitung und beispielsweise dem sog. Cowper, sowie im geöffneten Zustand innerhalb des Gehäuses nur Sekundärwirbeln und keiner dynamischen Strömung ausgesetzt ist, kann keine dynamische Temperaturbeaufschlagung auftreten. Die Höchstbelastung tritt somit bei den Umschaltvorgängen auf, auf die die Dehnungsspalte abzustimmen sind.

Um vorzeitige Verschleißerscheinungen an der Außenisolation 5 zu vermeiden, werden sich radial nach außen erstreckende Prallbleche 61 (Fig. 2) strömungsseitig an der radial äußeren Umfangsfläche der Dichtleiste 1 angeschweißt.

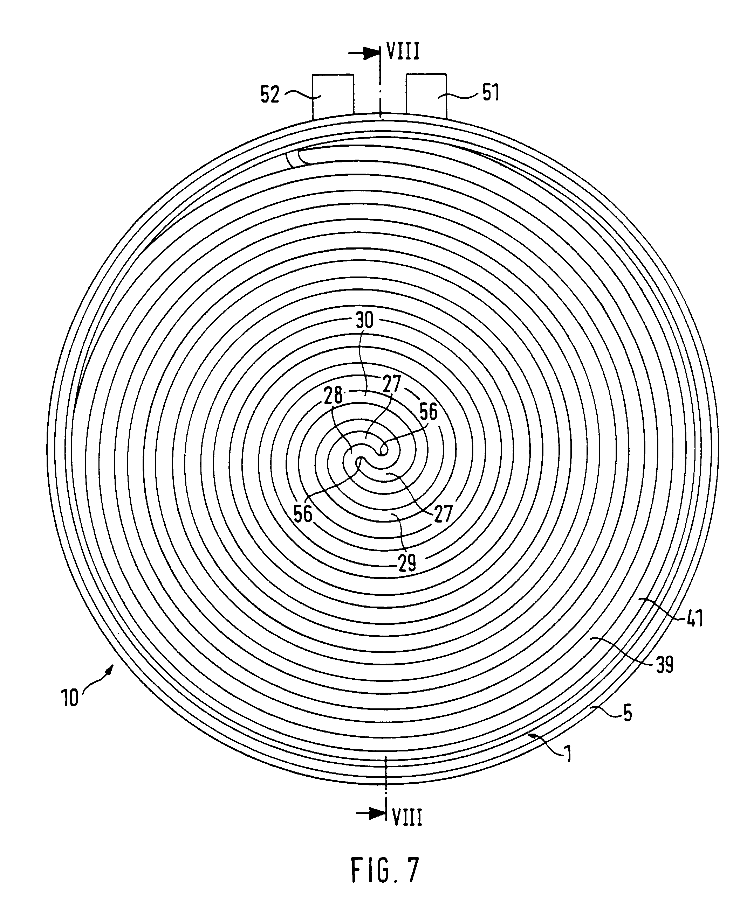

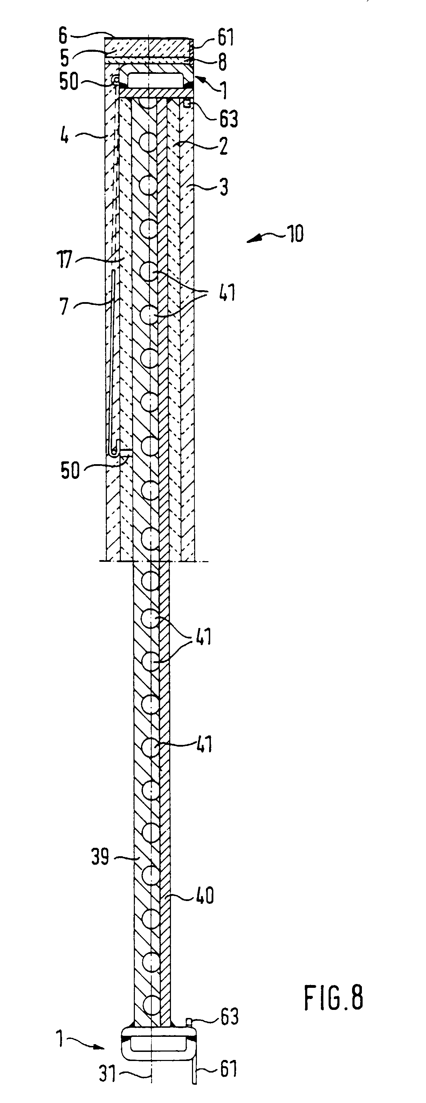

In den Figuren 7 und 8 ist eine zweite Ausführungsvariante einer gekühlten Schieberplatte 10 dargestellt. Der durch die Dichtleiste 1 begrenzte, tragende Teil der Schieberplatte 10 wird durch eine kreisförmige Basisplatte 39 und eine denselben Durchmesser aufweisende, dünnere Deckplatte 40 gebildet. In der Basisplatte 39 ist eine doppelspiralförmige Nut 41 ausgebildet, beispielsweise eingefräst. Durch Aufbringen der Deckplatte 40 auf die Basisplatte 39 wird die Nut 41 verschlossen und damit ein Kühlkanal gebildet. Die Nut 41 ist jeweils endseitig mit einem Kühlmediumeinlaß 51 und einem Kühlmediumauslaß 52 verbunden, über die das Kühlmedium in den Kühlkanal ein- bzw. aus diesem wieder ausgeleitet wird.

Auch im vorliegenden Fall erfolgt eine Strömungsumkehr in einem S-förmigen Nutabschnitt, der in einem zentralen Bereich der Schieberplatte 10 vorgesehen ist und sich an die Spiralabschnitte 29 und 30 anschließt. Der Biegeradius 56 der Nut 41 im Strömungsumkehrbereich 27 ist nicht wie bei der vorhergehend beschriebenen Variante durch Materialeigenschaften begrenzt, so daß keine zusätzlichen Maßnahmen für eine ausreichende Kühlung des Zentralbereichs getroffen werden müssen.

Die Ausbildung, Anordnung und Befestigung der Isolierungen erfolgt analog zum vorhergehenden Ausführungsbeispiel.

Das Aufbringen der Deckplatte 40 auf die Basisplatte 39 erfolgt mittels Explosionsfügen, wobei je nach erforderlicher Dicke der Deckplatte 40 ein oder mehrere Arbeitsgänge erforderlich sind. Beim Zusammenfügen von Deckplatte 40 und Basisplatte 39 wird die doppelspiralförmig geformte Nut 41 mit einem Material gefüllt, das die Querschnittsform der Nut 41 beim Fügevorgang aufrechterhält. Wegen der außerordentlichen Fügegeschwindigkeit muß das Material keinen besonderen Festigkeitsanforderungen und Temperaturbeständigkeiten genügen. Es kann eine Legierung oder ein Metall mit niedrigem Schmelzpunkt und niedriger Benetzungsfähigkeit verwendet werden, die bzw. das nach dem Fügevorgang durch Erhitzen des Gesamtbauteils leicht wieder entfernbar ist. Vor dem Zusammenfügen sind beide zusammenzufügende Flächen zu bearbeiten, um eine definierte Mindestoberflächenrauhigkeit gewährleisten zu können. Mit dem Fügevorgang ist eine schnelle, einfache und sichere Verbindungstechnik gegeben, die einen dichten Kühlkanal gewährleistet. Die "aufgesprengte" Deckplatte ist mit der Basisplatte 39 (groß-) flächig verbunden.

Alternativ ist es möglich, zwei dünnere Platten zu verwenden, in denen auf beiden einander zugewandten Oberflächen doppelspiralförmige Nuten jeweils spiegelverkehrt eingearbeitet sind. Bei einem genauen und zentrierten Verbinden beider derart ausgebildeten Platten wird auch hierbei ein doppelspiralförmiger Kühlkanal gebildet. Vorteilhaft hierbei ist eine homogenere Temperaturverteilung an der Metalloberfläche der gekühlten Schieberplatte 10.

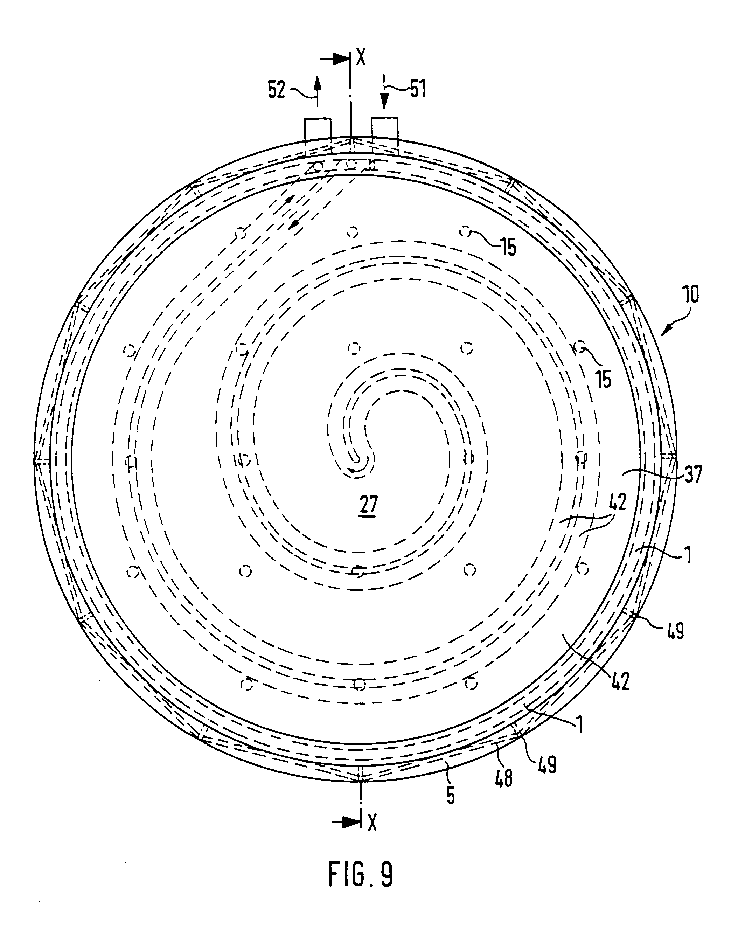

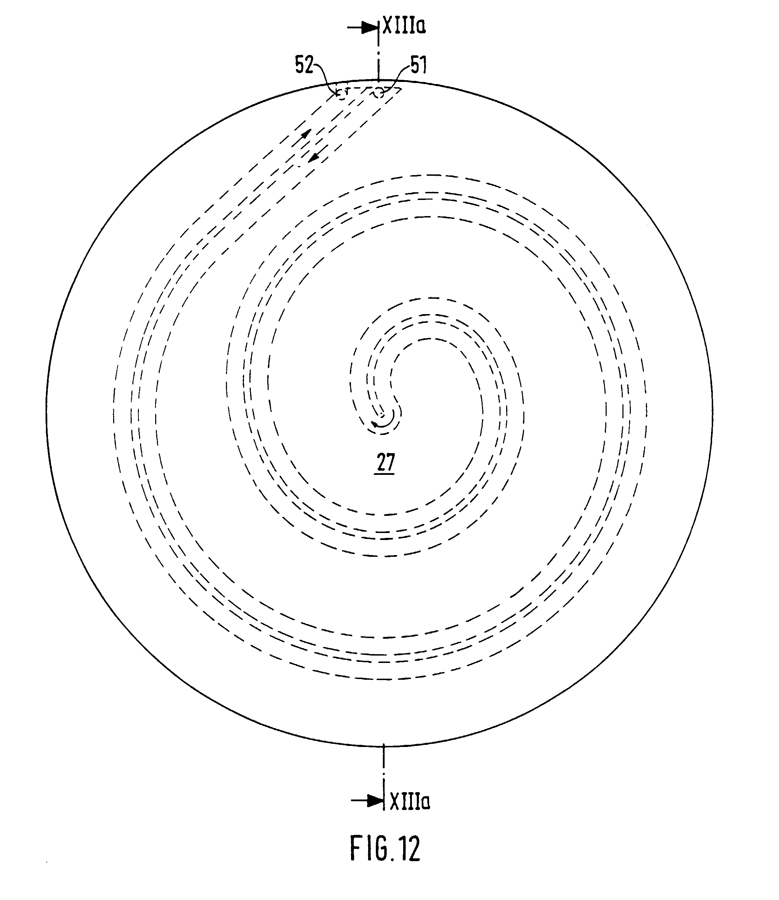

In den Figuren 9 bis 13b ist eine dritte Alternative einer gekühlten Schieberplatte dargestellt. Die tragende Konstruktion der Schieberplatte 10 besteht aus einer kreisrunden Trägerplatte 37. Auf einer Seite derselben ist ein Blech 42 mit gleichem Durchmesser aufgebracht. Das Blech 42 weist eine doppelspiralförmige Ausnehmung auf, so daß ein doppelspiralförmiger Kühlkanal zwischen der Trägerplatte 37 und dem aufgebrachten Blech 42 ausgebildet ist, wenn das Blech 42 auf die Trägerplatte 37 aufgebracht wird. (Siehe Fig. 13a).

Die doppelspiralförmige Ausnehmung bzw. Verformung im Blech 42 kann beispielsweise auf folgende Arten erreicht werden.

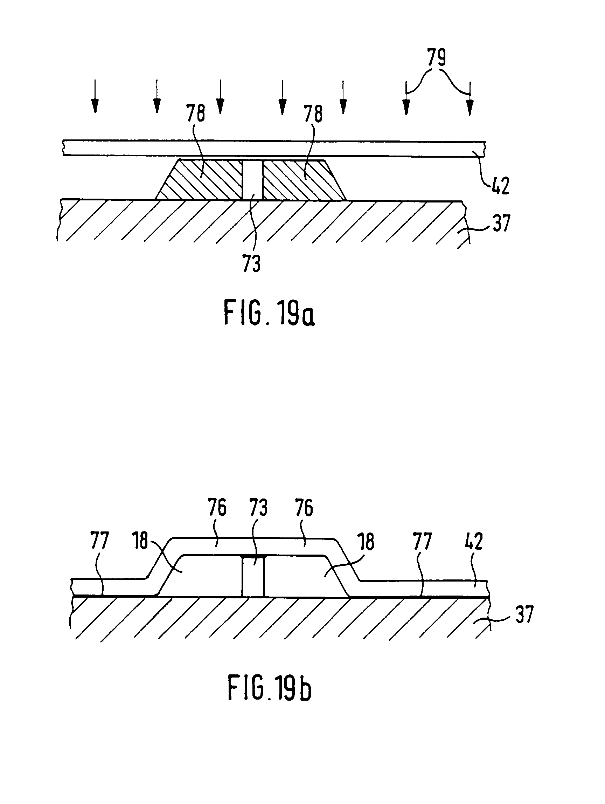

Auf der Trägerplatte 37 wird eine vorgenannt bereits erwähnte Legierung oder ein Metall 78 (siehe Fig. 19a) mit niedrigem Schmelzpunkt und niedriger Benetzungsfähigkeit in Doppelspiralform aufgebracht. Dieses Verformungsmaterial dient als Prägeprofil für das Blech 42. Beim Auffügen (siehe Pfeile 79 in Fig. 19a), insbesondere beim "Aufsprengen" (Explosionsverformung) des Bleches 42 auf die Trägerplatte 37 werden dann die Ausnehmungen im Blech 42 - und somit der Kühlkanal 18 (siehe Fig. 19b) zwischen Blech 42 und Trägerplatte 37 - ausgebildet und gleichzeitig das Blech 42 an den Stellen ohne Verformung mit der Trägerplatte 37 fest und fluiddicht verbunden (siehe Verbindungsflächen 77 in Fig. 19b). Die Höhe der Kühlkanäle entspricht dabei dem erforderlichen Beschleunigungsweg des Blechs 42, das beim Auftreffen auf die Trägerplatte 37 einen Druck von einigen 100 kbar erzeugt und an den Fügestellen eine intermetallische Verbindung mit hoher Festigkeit bewirkt. Eine Abschrägung des aufgegossenen und als Prägeprofil dienenden Materials an den Flanken hängt von der Zähigkeit des Bleches 42 ab. Die Blechverformungs-Legierung oder alternativ auch das Blechverformungs-Metall können mit Hilfe temperaturbeständiger Formen mit verschiedenen, beispielsweise halbkreis- oder rechteckförmigen Querschnitten auf der Trägerplatte 37 ausgebildet werden. Die Längserstreckung der Form auf der Trägerplatte 37 kann doppelspiral-, zick-zack- oder mäanderförmig sein.

In den Fig. 19a und 19b ist ein Steg 73 zu erkennen, der in die Blechverformungs-Legierung eingebettet und bereits vor dem Zusammenfügen von Blech 42 und Trägerplatte 37 mit letzterer verbunden ist. Beim Auf fügen des Blechs 40 auf die Trägerplatte 37 wird ersteres mit der Oberseite des sich ebenfalls doppelspiral-, mäander-, oder zick-zack-förmig erstreckenden Steges 73 fest verbunden. Nach dem Herausschmelzen der Legierung trennt der Steg 73 dann den Kühlmittelein- vom Kühlmittelausströmkanal.

Alternativ können die Ausnehmungen im Blech 42 auch vor dem Aufbringen des Blechs 42 auf die Trägerplatte 37 ausgebildet sein. Die Verbindung zwischen Blech 42 und Trägerplatte 37 kann dann mittels einer Rollschweißung erfolgen.

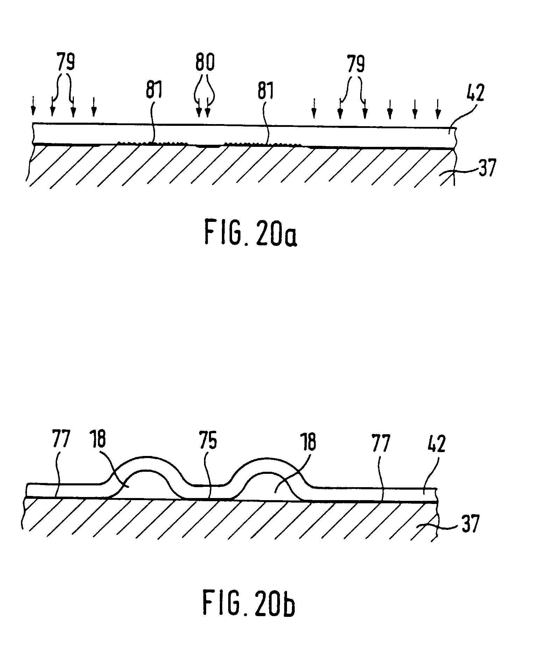

Eine weitere Möglichkeit der Ausbildung des Kühlkanals 18 ist in den Fig. 20a und 20b dargestellt. Das Blech 42 wird an bestimmten Stellen - siehe Pfeile 79 und 80 - auf der Trägerplatte 37 durch Explosionsfügen aufgebracht. Eine später im Kühlkanal befindliche und sich entsprechend dem Kühlkanal 18 erstreckende Fläche der Trägerplatte 37 weist eine derartige Rauhigkeit 81 auf, daß in diesem Bereich keine Verbindung von Blech 42 und Trägerplatte 37 zustande kommt. Eine linien- oder flächenartige Verbindung liegt somit lediglich in den mit dicken Linien 75 und 77 gekennzeichneten Bereichen vor.

Nach dem Aufbringen des Bleches 42 auf die Trägerplatte 37 wird zwischen beiden Plattenteilen ein hydraulisches Fluid eingebracht und mit einem Druck von bis zu 5000 bar beaufschlagt. Dadurch wird der Kühlkanal 18 unter "hydraulischem Aufblähen" des Bleches 42 ausgebildet. Das aufgeblähte Blechteil stellt die Kühlkanalbegrenzung 76 dar.

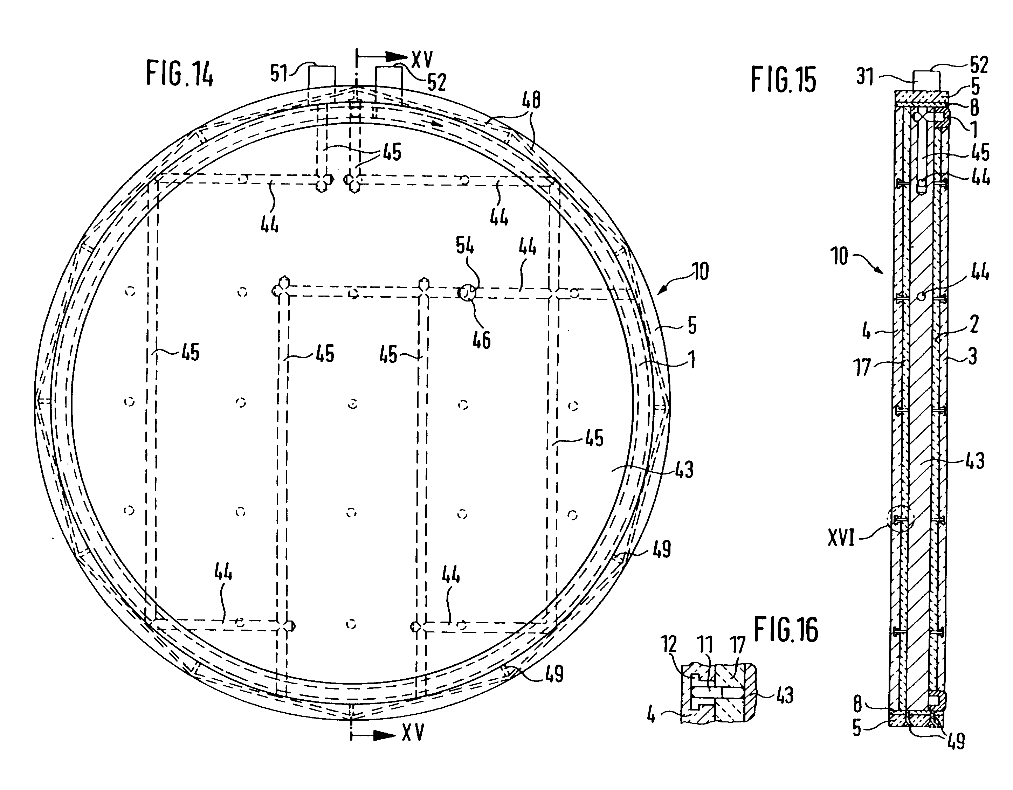

Im Gegensatz zu den beiden erstgenannten Ausführungsbeispielen einer Schieberplatte wird gemäß der dritten Alternative gemäß den Figuren 9 bis 13b die Dichtleiste 1 dadurch gebildet, daß ein U-Profilring im Stirnbereich der Trägerplatte 37 auf deren Strömungsseite (in allen beigefügten Gesamtdarstellungen die jeweils rechte Seite!) angeordnet ist. Sie schließt radial außen bündig mit der Trägerplatte 37 ab. Die genannte Anordnung der Dichtleiste 1 ist z.B. in Fig. 15, die eine weitere, weiter unten noch näher zu erläuternde Alternative einer Schieberplattenkonstruktion zeigt, dargestellt.

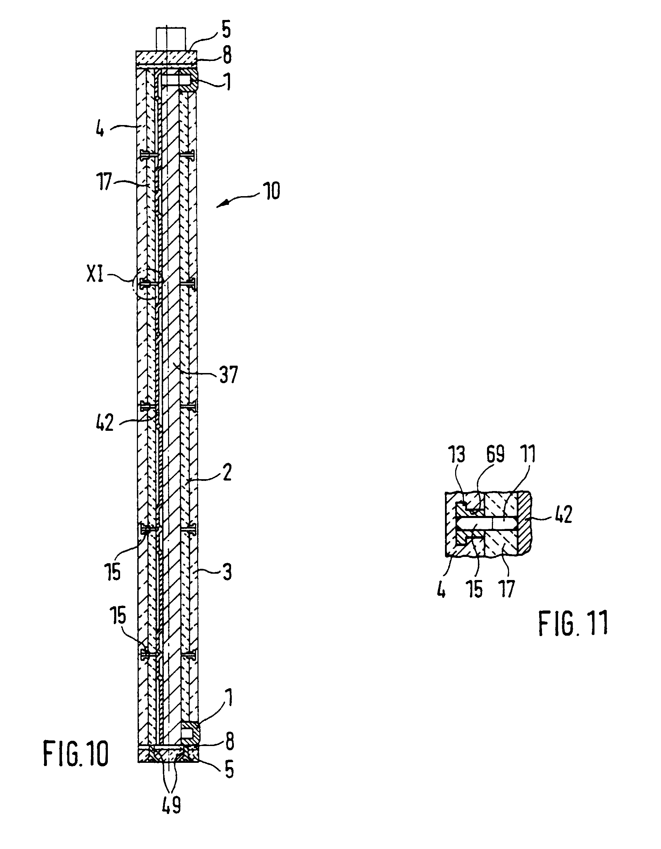

Radial innerhalb der Dichtleiste 1 und strömungsseitig sowie auf dem Blech 42 druckseitig sind, wie vorgenannt beschrieben, die äußeren Isolierungen 3 und 4 sowie die inneren Isolierungen 2 und 17 angeordnet. Dazu wird als Haltestift 15, wie in Fig. 11 gezeigt ist, ein am Blech 42 angeschweißter Schraubstift verwendet, auf den eine Kopfmutter 13 aufschraubbar ist. Wie vorgenannt bereits erwähnt, wird zumindest die Kopfmutter 13 umfangsmäßig mit einem leicht abbrennbaren Material versehen, so daß ein Dehnfugenspalt nach der ersten Benutzung der Schieberplatte entsteht.

Die Haltestifte 15 sind, wie aus Fig. 9 ersichtlich ist, rastermäßig auf dem Blech 42 angeordnet, so daß eine gleichmäßige Befestigung der Isolierungen über die gesamte Schieberplatte 10 gewährleistet wird.

Der durch die Ausnehmungen im Blech 42 gebildete Kühlkanal wird endseitig mit einem Kühlmediumeinlaß 51 sowie einem Kühlmediumauslaß 52 verbunden. Im zentralen Bereich der Schieberplatte 10 kehrt sich auch hierbei die Strömungsrichtung des Kühlmediums um (Strömungsumkehrbereich 27).

Die äußere Isolierung 4, die innere Isolierung 17, das Blech 42, die Trägerplatte 37 sowie daran angeschweißte Dichtleiste 1 bilden radial außen eine bündige Umfangsfläche, auf der die umfangsmäßig angeordneten Isolierungen 8 und 5 aufliegen. Durch die innere Isolierung 8 und einen Teil der äußeren Isolierung 5 erstrecken sich in zwei Ebenen im gleichen Winkelabstand voneinander angeordnete Y-Anker, in deren Gabeln zwei parallel zueinander verlaufende Spannseile 48 gehalten sind, die sich innerhalb des äußeren Isolierringes 5 erstrecken und den äuße-ren Isoliermantel radial zusammenhalten. Die Spannseile 48 bestehen ebenfalls aus einem Isoliermaterial, insbesondere aus Keramikmaterial.

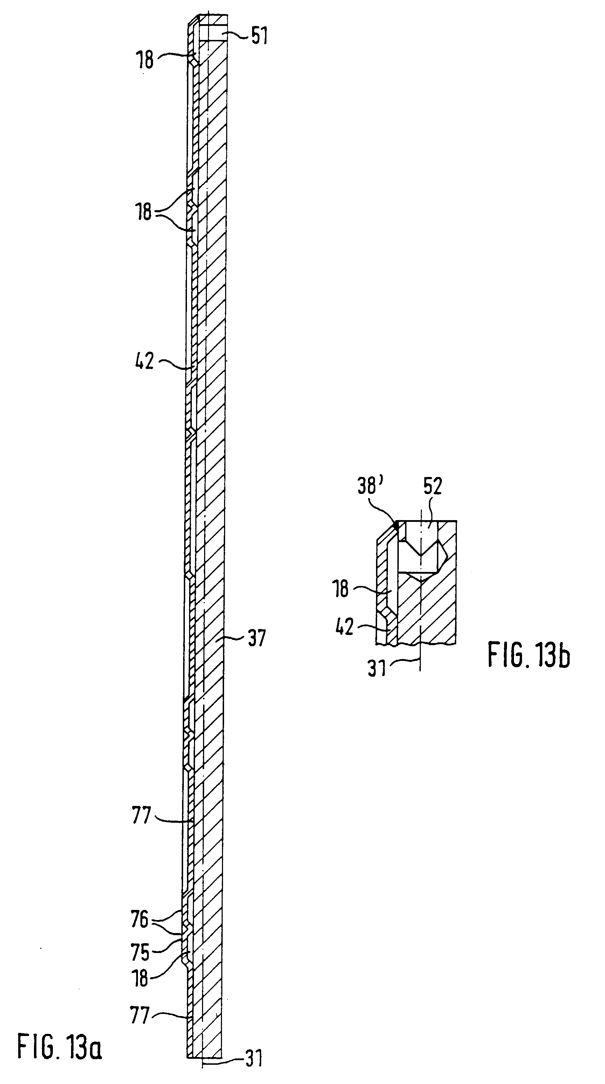

In Fig. 13b ist eine konstruktive Möglichkeit eines Kühlkanalausgangs dargestellt. Dabei sind am radial äußeren Ende der Trägerplatte 37 zwei senkrecht zueinander ausgebildete und eine Verbindung miteinander aufweisende Bohrungen angeordnet, wobei die sich im wesentlichen horizontal erstreckende Bohrung eine Fluidverbindung mit dem Kühlkanal und die sich radial nach außen erstreckende Bohrung die Verbindung mit beispielsweise dem Kühlmediumauslaß 52 herstellt. Gemäß Fig. 10 kann der Kühlkanal auch durch eine sich axial durch die Trägerplatte 37 erstreckende Bohrung direkt mit einem in der Dichtleiste 1 vorgesehenen Hohlraum fluidverbunden sein.

In den Figuren 14 bis 18 ist eine vierte Alternative für eine gekühlte Schieberplatte 10 dargestellt. Im Unterschied zum vorhergehenden Ausführungsbeispiel werden die Trägerplatte 37 und das Blech 42 durch eine Kernplatte 43 ersetzt. In der Kernplatte 43 sind sich senkrecht zueinander erstreckende Bohrungen 44 und 45 vorgesehen, die sich in Plattenmittenebene erstrecken und unter Ausbildung eines Kühlkanals schneiden. Die Anordnung der Bohrungen 44, 45 ist in Fig. 14 durch gestrichelte Linien dargestellt. Zunächst erstreckt sich eine vertikale Sackbohrung 45 vom Fluidmediumeinlaß 51 nach unten und kreuzt an ihrem unteren Ende eine sich horizontale erstreckende Sackbohrung 44. Im Bereich des äußeren Endes dieser Sackbohrung ist eine Bohrung 45 angeordnet, die sich in vertikaler Richtung erstreckt und an ihrem unteren Ende mit einer horizontalen Sackbohrung 44 in Verbindung steht. Diese ist mit einer vertikalen Sackbohrung verbunden, welche sich am oberen Ende mit einer weiteren horizontalen Sackbohrung 44 schneidet. Damit ist im wesentlichen die Hälfte des Kühlkanals gebildet. Die andere Hälfte ist gleichermaßen hergestellt, wie der Fig. 14 leicht entnommen werden kann.

Um einen vorbestimmten Strömungsverlauf auszubilden, ist in eine Bohrung 44 ein Schließpropfen 46 eingesetzt (siehe Fig. 14). Dazu wird eine axiale Bohrung 54 ausgebildet, die die horizontale Sackbohrung 44 derart schneidet, daß durch Einsetzen des Schließpropfens 46 in die axiale Bohrung 54 der Durchgang der horizontalen Sackbohrung 44 verschlossen ist. Somit ist ein in etwa mäanderförmiger Kanal gebildet, durch den das Kühlmedium die Schieberplatte 10 durchströmen kann.

Radial außen werden die durch die Bohrungen 44 und 45 gebildeten Öffnungen in der Kernplatte 43 durch Propfen oder dergleichen Sperrelemente verschlossen, so daß kein Kühlmedium austreten kann.

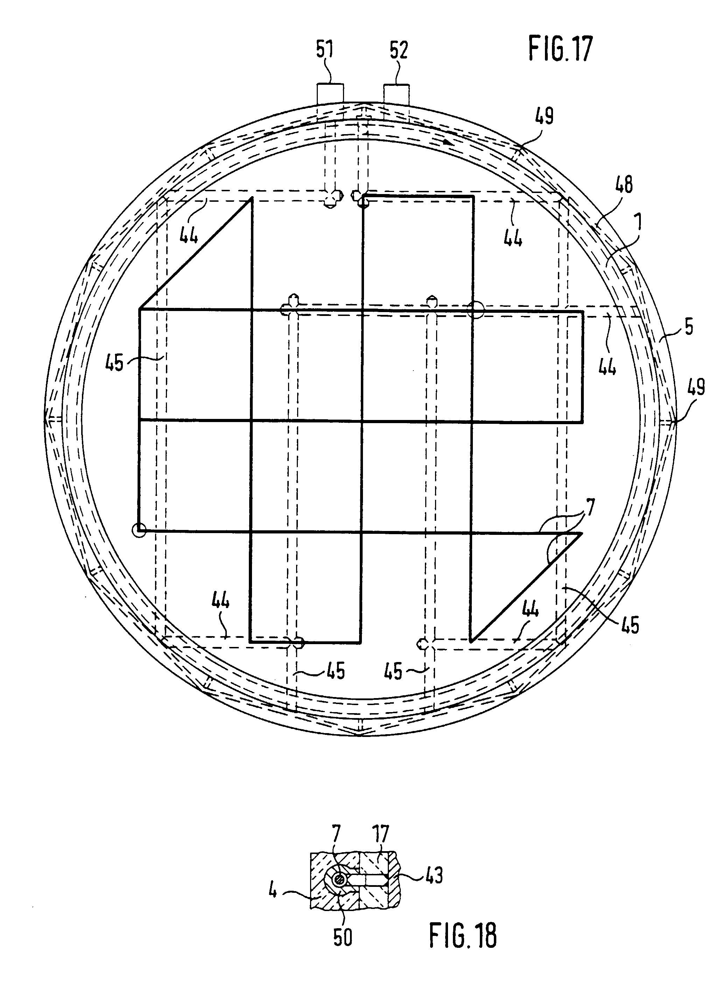

In Fig. 17 ist eine beispielsweise Führung eines Spannseils 7 dargestellt, das in der druckseitigen, äußeren Isolierung 4 der Schieberplatte 10 angeordnet ist. Das Spannseil 7 erstreckt sich in zwei Richtungen senkrecht zueinander jeweils mäanderförmig oder unter Ausbildung eines Spannseil-Netzes. Damit wird ein gleichmäßiger Halt der äußeren Isolierung 4 in radialer und tangentialer Weise erreicht, wobei dennoch ein gewisser Bewegungsspielraum der Isolierung in radialer und axialer Richtung bleibt. Das Spannseil 7 ist dabei in am tragenden Teil der Schieberplatte 10 angeschweißten Ösen oder Ringstiften geführt, von denen eine bzw. einer in Fig. 18 dargestellt ist.

In Fig. 15 oben ist zu erkennen, daß durch eine axiale Bohrung durch die Kernplatte 43 der Hohlraum der Dichtleiste 1 mit dem in der Kernplatte 43 ausgebildeten Kühlkanal fluidverbunden ist, so daß auch die Dichtleiste gekühlt werden kann.

Mit den vorgenannten vier Alternativen für eine gekühlte Schieberplatte sind einfache und preiswerte Konstruktionsmöglichkeiten gegeben, wobei durch die Verwendung der zweischichtige Isolierung und die Vermeidung von Wärmebrücken nur eine minimale Kühlung erforderlich ist. Dies resultiert in einem geringen Wasserverbrauch und einer kleinen Pumpleistung. Mit den vorgenannten Alternativen läßt sich darüber hinaus der Kühlkanalquerschnitt jederzeit an die erforderliche Kühlleistung für eine gekühlte Schieberplatte anpassen. Im übrigen ist eine Reparatur von eventuell auftretenden Undichtigkeiten durch eine zerstörungsfreie Entfernung der Isolationselemente jederzeit möglich.

### Bezugszeichenliste

- 1: Dichtleiste
- 2: Mikrothermplatte
- 3: Keramikschaumplatte
- 4: Keramikschaumplatte
- 5: Isolierung (außen)
- 6: Keramikfasergewebe
- 7: Spannseil
- 8: Isolierung (innen)/Isoliermatte (elastisch)
- 10: Heißwindschieberplatte
- 11: Haltebolzen
- 12: Kopf (von 11)
- 15: Haltestift
- 17: Mikrothermplatte
- (18: Kühlkanal)
- 20: Zwischenblech
- 21: Blech
- 22: U-Profilring (von 1)
- 23: Ring (von 1)
- 24: Rohr (Kühlrohr)
- 27: Strönungsumkehrbereich
- 28: S-Rohrabschnitt
- 29: Spiralrohrabschnitt
- 30: Spiralrohrabschnitt
- 31: Schieberplatten-Mittenebene
- 32: Teilraum
- 33: Teilraum
- 34: Eintrittsöffnung
- 35: Austrittsöffnung
- 36: Querwand
- 37: Trägerplatte
- 38: Schweißnähte
- 38': Schweißnähte
- 39: Basisplatte
- 40: Deckplatte
- 41: Nut
- 42: Blech
- 43: Kernplatte
- 44: Bohrung
- 45: Bohrung
- 46: Schließpropfen
- 48: Spannseil
- 49: Y-Anker
- 50: Ringstift/Öse
- 51: Kühlmediumeinlaß
- 52: Kühlmediumauslaß
- 54: Axialbohrung
- 56: Biegeradius
- 58: Ausströmbereich
- 59: Einströmbereich
- 61: Prallblech
- 62: Halteblech
- 63: Halteelement
- 64: Haltering
- 65: Drosselstelle
- 67: Kühlmediumströmungspfeile
- 69: brennbare Beschichtung
- 70: Raum (zentral)
- 71: elast. Glied oder abbrennbare Schicht
- 72: Entlastungsbohrung
- 73: Steg
- 75: Liniensprengung
- 76: Kühlkanalbegrenzung
- 77: Flächenverbindung
- 78: Legierung
- 79: Pfeile (Flächensprengung)
- 80: Pfeile (Liniensprengung)
- 81: Rauhigkeitsunterschied

## Patentansprüche

1. Gekühlte Schieberplatte, insbesondere wassergekühlte Heißwindschieberplatte (10), mit einem von einem Kühlmedium, insbesondere Wasser, durchströmten Kühlkanal und einer sich über den Umfang erstreckenden Dichtleiste (1), wobei beide·Seiten der Schieberplatte (10) mit Ausnahme des an einem Schiebergehäusedichtsitz anliegenden Teils der Dichtleiste (1) mit einem wärmedämmenden Material (2, 3, 4, 5, 8, 17) verkleidet sind und wobei der durch die Dichtleiste (1) begrenzte Teil der Schieberplatte (10) ein in Plattenebene mehrfach gebogenes Rohr (24) umfaßt, das als Kühlkanal dient und dementsprechend mit einem Ende an einen Kühlmediumeinlaß (51) und mit dem anderen Ende an einen Kühlmediumauslaß (52) angeschlossen ist,
dadurch **gekennzeichnet**,
daß das als Kühlkanal dienende Rohr (24) doppelspiralförmig gebogen ist derart, daß es über die gesamte Plattenfläche mit Ausnahme eines zentralen Strömungsumkehrbereichs (27) mit dem jeweils benachbarten Rohrabschnitt in Berührungskontakt steht und längs der ebenfalls doppelspiralförmigen Berührungslinie zu einem formstabilen Plattenteil verbunden, insbesondere verschweißt (Schweißnaht 38) ist.

2. Schieberplatte nach Anspruch 1,
dadurch **gekennzeichnet**,
daß der zentrale Strömungsumkehrbereich (27) einen S-förmig gebogenen Rohrabschnitt (28) umfaßt.

3. Schieberplatte nach Anspruch 2,
dadurch **gekennzeichnet**,
daß der Raum (70) zwischen dem S-förmig gebogenen Rohrabschnitt (28) und den unmittelbar daran angrenzenden Spiralrohrabschnitten (29, 30) durch zwei axial voneinander beabstandete, insbesondere im Bereich der beiden Außenflächen der Schieberplatte (10) liegende Bleche (21) begrenzt ist, wobei der von den Blechen (21) begrenzte Raum (70) ebenfalls vom Kühlmedium durchströmt und über Eintritts- (34) und Austrittsöffnungen (35) im S-förmig gebogenen Rohrabschnitt mit diesem fluidverbunden ist.

4. Schieberplatte nach Anspruch 3,
dadurch **gekennzeichnet**,
daß der Raum (70) zwischen den beiden Blechen (21) durch ein insbesondere in Schieberplatten-Mittenebenen (31) liegendes Zwischenblech (20) in zwei axial voneinander beabstandete Teilräume (32, 33) unterteilt ist, die jeweils über Ein- (34) und Austrittsöffnungen (35) im S-förmig gebogenen Rohrabschnitt (28) mit diesem derart fluidverbunden sind, daß das Kühlmedium an einer ersten Stelle (Eintrittsöffnungen 34) aus dem S-förmig gebogenen Rohrabschnitt (28) in jeweils einen Teilraum (33) strömt, um dann an einer zweiten Stelle (Austrittsöffnungen 35) wieder in den S-förmig gebogenen Rohrabschnitt (28) zurückzuströmen.

5. Schieberplatte nach Anspruch 3 oder 4,
dadurch **gekennzeichnet**,
daß der Durchgang des S-förmig gebogenen Rohrabschnitts (28) zwischen den Ein- (34) und Austrittsöffnungen (35) verengt ist (Strömungsdrossel).

6. Schieberplatte nach Anspruch 3 oder 4,
dadurch **gekennzeichnet**,
daß der Durchgang des S-förmig gebogenen Rohrabschnitts (28) zwischen den Ein- (34) und Austrittsöffnungen (35) unterbrochen, insbesondere durch eine Querwand (36) abgesperrt ist.

7. Gekühlte Schieberplatte, insbesondere wassergekühlte Heißwindschieberplatte (10), mit einem von einem Kühlmedium, insbesondere Wasser, durchströmten Kühlkanal und einer sich über den Umfang erstreckenden Dichtleiste (1), wobei beide Seiten der Schieberplatte (10) mit Ausnahme des an einem Schiebergehäusedichtsitz anliegenden Teils der Dichtleiste (1) mit einem wärmedämmenden Material (2, 3, 4, 5, 8, 17) verkleidet sind,
dadurch **gekennzeichnet**,
daß der durch die Dichtleiste (1) begrenzte Teil der Schieberplatte (10) durch eine Basisplatte (39) mit doppelspiral, zick-zack- oder mäanderförmig ausgebildeter Nut (41) und eine diese axial verschließende Deckplatte (40) gebildet ist, wobei die durch die Deckplatte (40) verschlossene Nut (41) den Kühlkanal definiert und dementsprechend mit ihrem einen Ende an einen Kühlmediumeinlaß (51) und mit ihrem anderen Ende an einen Kühlmediumauslaß (52) angeschlossen ist.

8. Schieberplatte nach Anspruch 7,
dadurch **gekennzeichnet**,
daß die Deckplatte (40) auf die Basisplatte (39) "aufgesprengt" ist.

9. Gekühlte Schieberplatte, insbesondere wassergekühlte Heißwindschieberplatte (10), mit einem von einem Kühlmedium, insbesondere Wasser, durchströmten Kühlkanal und einer sich über den Umfang erstreckenden Dichtleiste (1), wobei beide Seiten der Schieberplatte (10) mit Ausnahme des an einem Schiebergehäusedichtsitz anliegenden Teils der Dichtleiste (1) mit einem wärmedämmenden Material (2, 3, 4, 5, 8, 17) verkleidet sind,
dadurch **gekennzeichnet**,
daß der durch die Dichtleiste (1) begrenzte Teil der Schieberplatte (10) durch eine Trägerplatte (37) gebildet ist, auf deren mindestens einen Seite ein Blech (42) aufgeschweißt ist, welches derart geformt ist, daß zwischen dem Blech (42) und der Trägerplatte (37) ein doppelspiral-, zick-zack- oder mäanderförmiger Kühlkanal begrenzt ist.

10. Schieberplatte nach Anspruch 9,
dadurch **gekennzeichnet**,
daß das den Kühlkanal definierende Blech (42) auf die Trägerplatte (37) "aufgesprengt" oder mittels Rollschweißung mit der Trägerplatte (37) verbunden ist.

11. Gekühlte Schieberplatte, insbesondere wassergekühlte Heißwindschieberplatte (10), mit einem von einem Kühlmedium, insbesondere Wasser, durchströmten Kühlkanal und einer sich über den Umfang erstreckenden Dichtleiste (1), wobei beide Seiten der Schieberplatte (10) mit Ausnahme des an einem Schiebergehäusedichtsitz anliegenden Teils der Dichtleiste (1) mit einem wärmedämmenden Material (2, 3, 4, 5, 8, 17) verkleidet sind,
dadurch **gekennzeichnet**,
daß der durch die Dichtleiste (1) begrenzte Teil der Schieberplatte (10) durch eine Kernplatte (43) gebildet ist, die sich in Plattenebene, insbesondere in Plattenmittenebene (31) erstreckende Bohrungen (44, 45) umfaßt, die unter Ausbildung eines vorbestimmten, insbesondere mäanderförmigen Kühlkanals miteinander fluidverbunden sind.

12. Schieberplatte nach Anspruch 11,
dadurch **gekennzeichnet**,
daß die miteinander fluidverbundenen Bohrungen (44, 45) sich etwa senkrecht zueinander erstrecken und vorzugsweise jeweils von radial außen her ausgebildet sind, insbesondere unter Ausbildung eines vorbestimmten Bohrungs- und damit Kühlkanalrasters.

13. Schieberplatte nach Anspruch 12,
dadurch **gekennzeichnet**,
daß zur Ausbildung eines vorbestimmten Strömungsverlaufs des Kühlmediums in die Bohrungen (44, 45) Schließpfropfen (46) einsetzbar sind.

14. Schieberplatte nach Anspruch 13,
dadurch **gekennzeichnet**,
daß die Schließpfropfen (46) jeweils in eine im Bereich einer Bohrung (44 und/oder 45) ausgebildeten Axialbohrung (54) derart einsetzbar sind, daß der Durchgang der zugeordneten Bohrung (44, 45) fluiddicht verschlossen ist.

15. Schieberplatte nach einem der Ansprüche 11 bis 14,
dadurch **gekennzeichnet**,
daß die radial außen liegenden Öffnungen der Kernplattenbohrungen (44, 45) - abgesehen von einer Kühlmediumein- und einer Kühlmediumauslaßöffnung - durch Pfropfen oder dgl. Sperrelemente verschließbar sind.

16. Schieberplatte nach einem der Ansprüche 1 bis 15,
dadurch **gekennzeichnet**,
daß die wärmedämmende Verkleidung der Schieberplatte (10) zweischichtig ausgebildet ist, insbesondere von innen nach außen bestehend aus:
- einer inneren Isolierung, insbesondere einer Mikrotherm-Platte (Warenzeichen) (2 bzw. 17 bzw. 8),
- und einer äußeren Isolierung, insbesondere einer Keramikfaserschaum- oder Feuerbetonplatte (3 bzw. 4 bzw. 5).

17. Schieberplatte nach Anspruch 16,
dadurch **gekennzeichnet**,
daß die äußere Isolierung (3, 4, 5) mit axialem und radialem Spiel relativ zur inneren Isolierung (2, 8, 17) und/oder zum tragenden Teil der Schieberplatte (10) angeordnet ist, um eine Zerstörung der Isolierung durch Biegung der Schieberplatte (10) und/oder Wärmespannungen zu vermeiden.

18. Schieberplatte nach Anspruch 16 oder 17,
dadurch **gekennzeichnet**,
daß die äußere Isolierung (5) radial durch ein Mantelelement, insbesondere ein Keramikfasergewebe (6), eingefaßt ist.

19. Schieberplatte nach einem der Ansprüche 16 bis 18,
dadurch **gekennzeichnet**,
daß die wärmedämmende Verkleidung durch sich etwa senkrecht dazu erstreckende Haltebolzen (11) oder -stifte (15) verankert ist.

20. Schieberplatte nach Anspruch 19,
dadurch **gekennzeichnet**, daß die Haltebolzen (11) oder -stifte (15) mit einer Schicht versehen sind, die bei höheren Temperaturen zerstört wird, insbesondere verbrennt.

21. Schieberplatte nach einem der Ansprüche 1 bis 20,
dadurch **gekennzeichnet**,
daß die äußere, sich parallel zur Schieberplatte (10) erstreckende Isolierung (4, 5) durch aus Isoliermaterial, insbesondere Keramikmaterial bestehende Spannelemente, insbesondere Spannseile (7), radial und/oder tangential vorgespannt ist.

22. Schieberplatte nach Anspruch 21,
dadurch **gekennzeichnet**,
daß die Spannelemente, insbesondere die Spannseile (7), sich vorzugsweise in zwei Richtungen senkrecht zueinander jeweils mäander- oder netzförmig erstrecken.

23. Schieberplatte nach Anspruch 21 oder 22,
dadurch **gekennzeichnet**,
daß die Spannelemente, insbesondere die Spannseile (7) im Inneren der äußeren Isolierung (4, 5) angeordnet sind.

24. Schieberplatte nach einem der Ansprüche 1 bis 23,
dadurch **gekennzeichnet**,
daß innerhalb der sich über den äußeren Umfang der Schieberplatte (10) erstreckenden Isolierung (5) ein Spannseil (48) angeordnet ist, das den äußeren Isoliermantel radial zusammenhält.

25. Schieberplatte nach Anspruch 24,
dadurch **gekennzeichnet**,
daß das Spannseil (48) über am äußeren Umfang der Dichtleiste (1) in etwa gleichem Winkelabstand voneinander angeordnete Ring- oder Y-Anker (49) gespannt ist.

26. Schieberplatte nach einem der Ansprüche 1 bis 25,
dadurch **gekennzeichnet**,
daß die Dichtleiste (1) ebenfalls vom Kühlmedium durchströmt ist, wobei der freie Strömungsquerschnitt so bemessen ist, daß das Kühlmedium die Dichtleiste (1) mit der etwa gleichen Geschwindigkeit durchströmt wie die übrigen Kühlkanalabschnitte.

## Claims

1. Cooled gate valve disc, in particular water-cooled hot-air gate valve disc (10), comprising a cooling channel which is flowed through by a cooling medium, in particular water, and a peripherally extending seal (1), and both sides of the gate valve disc (10), with the exception of the part of the seal (1) which abuts a gate valve housing seal seat, are lined with a heat absorbing material (2, 3, 4, 5, 8, 17), and the part of the gate valve disc (10) which is defined by the seal (1) encapsulates a pipe (24) which has been bent several times at disc level and which serves as cooling channel and is accordingly connected at one end to a cooling medium inlet (51) and at the other end to a cooling medium outlet (52), **characterised in that** the pipe (24) which serves as cooling channel is bent in the shape of a double spiral in such a manner that it makes contact over the entire disc surface, with the exception of a central flow-reversal area (27), with a respective adjacent pipe section, and that it is joined, in particular welded (welding seam 38), along the contact line, which is also in the shape of a double spiral, to form a shape retaining disc section.

2. Gate valve disc according to Claim 1, **characterised in that** the central flow-reversal area (27) includes an S-bent pipe section (28).

3. Gate valve disc according to Claim 2, **characterised in that** the space (70) between the S-bent pipe section (28) and the directly thereto adjacent spiral-pipe sections (29, 30) is defined by two metal plates (21), which are axially distanced from each other and located in particular in the area of the two external surfaces of the gate valve disc (10), and the space (70) which is defined by the metal plates (21) is also flowed through by cooling medium and fluid-connected to the pipe section via inlet (34) and outlet openings (35) in the S-bent pipe section.

4. Gate valve disc according to Claim 3, **characterised in that** the space (70) between both metal plates (21) is divided by an intermediate plate (20), in particular located in the centre planes of the gate valve discs (31), into two axially distanced partial areas (32, 33) which are fluid-connected via inlet (34) and outlet openings (35) in the S-bent pipe section (28) thereto in such a manner that the cooling medium flows at a first point (inlet openings 34) from the S-bent pipe section (28) into a respective partial area (33) in order to then flow back at a second point (outlet openings 35) into the S-bent pipe section (28).

5. Gate valve disc according to Claim 3 or 4, **characterised in that** the passage of the S-bent pipe section (28) between the inlet (34) and outlet openings (35) is narrowed (flow throttle).

6. Gate valve disc according to Claim 3 or 4, **characterised in that** the passage of the S-bent pipe section (28) is discontinued between the inlet (34) and outlet openings (35), in particular by a transverse wall (36).

7. Cooled gate valve disc, in particular water-cooled hot-air gate valve disc (10), comprising a cooling channel which is flowed through by a cooling medium, in particular water, and a peripherally extending seal (1), and both sides of the gate valve disc (10), with the exception of the part of the seal (1) which abuts a gate valve housing seal seat, are lined by a heat-absorbing material (2, 3, 4, 5, 8, 17), characterised in that the part of the gate valve disc (10) which is defined by the seal (1) is formed by a base plate (39) with double-spiral, zig-zag or meandering groove (41) and a cover plate (40) which axially seals the latter, and the groove (41) which is sealed by the cover plate (40) defines the cooling channel and is accordingly connected by its one end to a cooling medium inlet (51) and by its other end to a cooling medium outlet (52).

8. Gate valve disc according to Claim 7, characterised in that the cover plate (40) is "snapped" onto base plate (39).

9. Cooled gate valve disc, in particular water-cooled hot-air gate valve disc (10), comprising a cooling channel which is flowed through by a cooling medium, in particular water, and a peripherally extending seal (1), and both sides of the gate valve disc (10), with the exception of part of the seal (1) which abuts a gate valve housing seal seat, are lined with a heat-absorbing material (2, 3, 4, 5, 8, 17), **characterised in that** the part of the gate valve disc (10) which is defined by the seal (1) is formed by a support plate (37) onto the at least one side of which is welded a metal plate (42) which is of such shape that a double-spiral, zig-zag or meandering cooling channel is defined between the metal plate (42) and the carrier plate (37).

10. Gate valve disc according to Claim 9, **characterised in that** the metal plate (42) which defines the cooling channel is "snapped" onto the support plate (37) or connected to the support plate (37) by means of bead welding.

11. Cooled gate valve disc, in particular water-cooled hot-air gate valve disc (10), comprising a cooling channel with is flowed through by a cooling medium, in particular water, and a peripherally extending seal (1), and both sides of the gate valve disc (10), with the exception of the part of the seal (1) which abuts a gate valve housing seal seat, are lined with a heat absorbing material (2, 3, 4, 5, 8, 17), **characterised in that** the part of the gate valve plate (10) which is defined by the seal (1) is formed by a core plate (43) which comprises bores (44, 45) at plate level, in particular at the centre plane of the plate (31), which are fluid-connected to each other by forming a predetermined, in particular meandering cooling channel.

12. Gate valve disc according to Claim 11, **characterised in that** bores (44, 45) which are fluid-connected to each other extend approximately vertically to each other and are preferably arranged radially from the outside, in particular whilst forming a predetermined bore raster and thus a cooling channel raster.

13. Gate valve disc according to Claim 12, **characterised in that** sealing bungs (46) are insertible into the bores (44, 45) for setting up a predetermined flow path of the cooling medium.

14. Gate valve disc according to Claim 13, **characterised in that** the sealing bungs (46) are respectively insertible into an axial bore (54) placed in the area of a bore (44 and/or 45) in such a manner that the passage of the associated bore (44, 45) is made fluid-tight.

15. Gate valve disc according to one of Claims 11 to 14, **characterised in that** the radially externally positioned openings of the core-plate bores (44, 45), with the exception of a cooling medium inlet and a cooling medium outlet opening, are closable by means of bungs or blocking elements of this type.

16. Gate valve disc according to one of Claims 1 to 15, **characterised in that** the heat absorbing lining of the gate valve disc (10) is two-layered, in particular comprising from the inside to the outside:
• an internal insulation, in particular a Microtherm plate (Trade Mark)(2 or 17 or 8), and
• an external insulation, in particular a ceramic fibre foam or fire concrete plate (3 or 4 or 5).

17. Gate valve disc according to Claim 16, **characterised in that** the outer insulation (3, 4, 5) is arranged with axial and radial play relative to the internal insulation (2, 8, 17) and/or to the supporting part of the gate valve disc (10) in order to prevent destruction of the insulation by bending of the gate valve disc (10) and/or heat strain.

18. Gate valve disc according to Claim 16 or 17, **characterised in that** the outer insulation (5) is radially encased by a casing element, in particular a ceramic fibre fabric (6).

19. Gate valve disc according to one of Claims 16 to 18, **characterised in that** the heat absorbing lining is anchored by holding bolts (11) or holding pins (15) which extend approximately vertically thereto.

20. Gate valve disc according to Claim 19, **characterised in that** the holding bolts (11) or holding pins (15) are provided with a layer which is destroyed at higher temperatures, in particular combusted.

21. Gate valve disc according to one of Claims 1 to 20, **characterised in that** the external insulation (4, 5) which extends parallel to the gate valve disc (10) is radially and/or tangentially pretensioned by clamping elements of insulating material, in particular ceramic material, in particular clamping ropes (7).

22. Gate valve disc according to Claim 21, **characterised in that** the clamping elements, in particular the clamping ropes (7), preferably extend in two directions vertically to each other in a respective meandering or net shape.

23. Gate valve disc according to Claim 21 or 22, **characterised in that** the clamping elements, in particular the clamping ropes (7), are arranged in the interior of the external insulation (4, 5).

24. Gate valve disc according to one of Claims 1 to 23, **characterised in that** a clamping rope (48), which radially holds the external insulating casing together, is arranged within the insulation (5) which extends over the outer periphery of the gate valve disc (10).

25. Gate valve disc according to Claim 24, **characterised in that** the clamping rope (48) is clamped via ring or Y-anchors arranged over the outer periphery of the seal (1) at approximately equal angular distance from each other.

26. Gate valve disc according to one of Claims 1 to 25, **characterised in that** the seal (1) is also flowed through by cooling medium, and the free flow cross-section is of such dimension that the cooling medium flows through the seal (1) at approximately the same speed as the other cooling channel sections.

## Revendications

1. Plaque d'obturation refroidie de robinet-vanne, notamment plaque d'obturation (10) de robinet-vanne à vent chaud refroidie par eau, comportant un canal de refroidissement dans lequel s'écoule un fluide de refroidissement, notamment de l'eau, et une bande d'étanchéité (1) s'étendant le long de la périphérie, les deux côtés de la plaque d'obturation (10) du robinet vanne, exception faite d'une partie de la bande d'étanchéité (1) qui s'appuie sur un siège d'étanchéité du corps de robinet-vanne, étant revêtus d'un matériau calorifuge (2, 3, 4, 5, 8, 17), et la partie de la plaque d'obturation (10) du robinet-vanne, délimitée par la bande d'étanchéité (1), comprenant un tube (24) qui est cintré plusieurs fois dans le plan de la plaque, et sert de canal de refroidissement en étant, conformément à cela, raccordé par une extrémité à une entrée (51) de fluide de refroidissement et par l'autre extrémité à une sortie de fluide de refroidissement (52),
caractérisée en ce que le tube (24) servant de canal de refroidissement est cintré en forme de double spirale de façon telle, qu'il soit en contact direct avec le tronçon de tube respectivement voisin, ceci sur l'ensemble de la surface de la plaque, exception faite d'une zone centrale (27) d'inversion de l'écoulement, et les tronçons de tube sont assemblés le long de la ligne de contact également en forme de double spirale, pour former une partie de plaque de forme stable, notamment par soudage (joint soudé 38).

2. Plaque d'obturation de robinet-vanne selon la revendication 1, **caractérisée** en ce que la zone centrale (27) d'inversion de l'écoulement comprend un tronçon de tube (28) cintré en forme de S.

3. Plaque d'obturation de robinet-vanne selon la revendication 2, **caractérisée** en ce que la chambre (70) entre le tronçon de tube (28) cintré en forme de S et les tronçons de tube en spirale (29, 30) directement voisins, est délimitée par deux tôles (21) axialement espacées l'une de l'autre et notamment situées dans la zone des deux surfaces extérieures de la plaque d'obturation (10) du robinet-vanne, du fluide de refroidissement s'écoulant également dans l'espace ou chambre (70), qui est délimité par les tôles (21) et est relié sur le plan fluidique au tronçon de tube cintré en forme de S, par l'intermédiaire d'ouvertures d'entrée (34) et de sortie (35) dans ce tronçon de tube cintré en forme de S.

4. Plaque d'obturation de robinet-vanne selon la revendication 3, **caractérisée** en ce que la chambre (70) entre les deux tôles (21) est subdivisée, par une tôle intermédiaire (20) située plus particulièrement dans le plan médian (31) de la plaque d'obturation du robinet-vanne, en deux chambres partielles (32, 33) espacées axialement l'une de l'autre, qui sont reliées chacune sur le plan fluidique au tronçon de tube (28) cintré en forme de S par l'intermédiaire d'ouvertures d'entrée (34) et de sortie (35) dans ce dernier, de façon telle, que le fluide de refroidissement s'écoule en un premier endroit (ouvertures d'entrée 34) du tronçon de tube (28) cintré en forme de S respectivement dans une chambre partielle (33), pour ensuite à nouveau s'écouler en retour dans le tronçon de tube (28) cintré en forme de S, en un deuxième endroit (ouverture de sortie 35).

5. Plaque d'obturation de robinet-vanne selon la revendication 3 ou 4, **caractérisée** en ce que le passage du tronçon de tube (28) cintré en forme de S est rétréci (étranglement d'écoulement) entre les ouvertures d'entrée (34) et les ouvertures de sortie (35).

6. Plaque d'obturation de robinet-vanne selon la revendication 3 ou 4, **caractérisée** en ce que le passage du tronçon de tube (28) cintré en forme de S est interrompu, et notamment obturé par une paroi transversale (36), entre les ouvertures d'entrée (34) et les ouvertures de sortie (35).

7. Plaque d'obturation refroidie de robinet-vanne, notamment plaque d'obturation (10) de robinet-vanne à vent chaud refroidie par eau, comportant un canal de refroidissement dans lequel s'écoule un fluide de refroidissement, notamment de l'eau, et une bande d'étanchéité (1) s'étendant le long de la périphérie, les deux côtés de la plaque d'obturation (10) du robinet vanne, exception faite d'une partie de la bande d'étanchéité (1) qui s'appuie sur un siège d'étanchéité du corps de robinet-vanne, étant revêtus d'un matériau calorifuge (2, 3, 4, 5, 8, 17),
**caractérisée** en ce que la partie de la plaque d'obturation (10) du robinet-vanne, délimitée par la bande d'étanchéité (1), est formée par une plaque de base (39) comportant une rainure (41) en forme de double spirale, en zigzag ou en forme de méandres, et par une plaque de recouvrement (40) fermant axialement ladite plaque de base, la rainure (41) fermée par la plaque de recouvrement (40) définissant le canal de refroidissement et étant conformément à cela, raccordée par une de ses extrémités à une entrée (51) de fluide de refroidissement et par son autre extrémité à une sortie de fluide de refroidissement (52).

8. Plaque d'obturation de robinet-vanne selon la revendication 7, **caractérisée** en ce que la plaque de recouvrement (40) est appliquée par explosion sur la plaque de base (39).

9. Plaque d'obturation refroidie de robinet-vanne, notamment plaque d'obturation (10) de robinet-vanne à vent chaud refroidie par eau, comportant un canal de refroidissement dans lequel s'écoule un fluide de refroidissement, notamment de l'eau, et une bande d'étanchéité (1) s'étendant le long de la périphérie, les deux côtés de la plaque d'obturation (10) du robinet vanne, exception faite d'une partie de la bande d'étanchéité (1) qui s'appuie sur un siège d'étanchéité du corps de robinet-vanne, étant revêtus d'un matériau calorifuge (2, 3, 4, 5, 8, 17),
**caractérisée** en ce que la partie de la plaque d'obturation (10) du robinet-vanne, délimitée par la bande d'étanchéité (1), est formée par une plaque de support (37) sur l'un au moins des côtés de laquelle est soudée une tôle (42), qui a été formée de façon à ce que soit délimité un canal de refroidissement en forme de double spirale, en zigzag ou en forme de méandres, entre la tôle (42) et la plaque de support (37).

10. Plaque d'obturation de robinet-vanne selon la revendication 9, **caractérisée** en ce que la tôle (42) définissant le canal de refroidissement est appliquée sur la plaque de support (37) par explosion, ou est reliée à la plaque de support (37) par soudage à la molette.

11. Plaque d'obturation refroidie de robinet-vanne, notamment plaque d'obturation (10) de robinet-vanne à vent chaud refroidie par eau, comportant un canal de refroidissement dans lequel s'écoule un fluide de refroidissement, notamment de l'eau, et une bande d'étanchéité (1) s'étendant le long de la périphérie, les deux côtés de la plaque d'obturation (10) du robinet vanne, exception faite d'une partie de la bande d'étanchéité (1), qui s'appuie sur un siège d'étanchéité du corps de robinet-vanne, étant revêtus d'un matériau calorifuge (2, 3, 4, 5, 8, 17),
**caractérisée** en ce que la partie de la plaque d'obturation (10) du robinet-vanne, délimitée par la bande d'étanchéité (1), est formée par une plaque formant âme (43) qui comporte des perçages (44, 45) s'étendant dans le plan de la plaque, et notamment dans le plan médian (31) de la plaque, et qui sont reliés les uns aux autres sur le pan fluidique en formant un canal de refroidissement prédéterminé, notamment en forme de méandres.

12. Plaque d'obturation de robinet-vanne selon la revendication 11, **caractérisée** en ce que les perçages (44, 45) reliés les uns aux autres sur le plan fluidique, s'étendent sensiblement de manière perpendiculaire les uns par rapport aux autres, et sont réalisés de préférence chacun radialement à partir de l'extérieur, notamment en formant un maillage de perçage et ainsi un canal de refroidissement prédéterminé.

13. Plaque d'obturation de robinet-vanne selon la revendication 12, **caractérisée** en ce que pour réaliser un parcours d'écoulement prédéterminé du fluide de refroidissement, des bouchons de fermeture (46) peuvent être insérés dans les perçages (44, 45).

14. Plaque d'obturation de robinet-vanne selon la revendication 13, **caractérisée** en ce que les bouchons de fermeture (46) peuvent être insérés chacun dans un perçage axial (54) réalisé dans la zone d'un perçage (44 et/ou 45), de façon à ce que le passage du perçage (44, 45) associé soit fermé de manière étanche aux fluides.

15. Plaque d'obturation de robinet-vanne selon l'une des revendications 11 à 14, **caractérisée** en ce que les ouvertures des perçages (44, 45) de la plaque formant âme, situées radialement à l'extérieur, et exception faite d'une ouverture d'entrée et d'une ouverture de sortie du fluide de refroidissement, peuvent être fermées par des bouchons ou d'autres éléments d'obturation similaires.

16. Plaque d'obturation de robinet-vanne selon l'une des revendications 1 à 15, **caractérisée** en ce que le revêtement calorifuge de la plaque d'obturation (10) du robinet-vanne est d'une configuration à deux couches, et est notamment constituée de l'intérieur vers l'extérieur:
- d'une isolation intérieure, notamment une plaque « Mikrotherm » (marque déposée) (respectivement 2, 17, 8),
- et d'une isolation extérieure, notamment une plaque de mousse de fibres céramiques ou de béton réfractaire (respectivement 3, 4, 5).

17. Plaque d'obturation de robinet-vanne selon la revendication 16, **caractérisée** en ce que l'isolation extérieure (3, 4, 5) est disposées avec un jeu axial et radial par rapport à l'isolation intérieure (2, 8, 17) et/ou à la struture porteuse de la plaque d'obturation (10) du robinet-vanne, en vue d'éviter une destruction de l'isolation par un fléchissement de la plaque d'obturation (10) du robinet-vanne et/ou des contraintes thermiques.

18. Plaque d'obturation de robinet-vanne selon la revendication 16 ou 17, **caractérisée** en ce que l'isolation extérieure (5) est enserrée radialement par un élément d'enveloppe, notamment un tissu de fibres céramiques (6).

19. Plaque d'obturation de robinet-vanne selon l'une des revendications 16 à 18, **caractérisée** en ce que le revêtement calorifuge est ancré par des broches de support (11) ou des chevilles de support (15).

20. Plaque d'obturation de robinet-vanne selon la revendication 19, **caractérisée** en ce que les broches de support (11) ou les chevilles de support (15) sont pourvues d'une couche, qui est détruite pour des températures plus élevées, notamment en se consumant.

21. Plaque d'obturation de robinet-vanne selon l'une des revendications 1 à 20, **caractérisée** en ce que l'isolation extérieure (4, 5) s'étendant parallèlement à la plaque d'obturation (10) du robinet-vanne, est mise en précontrainte radiale et/ou tangentielle par des éléments de serrage, notamment des câbles de serrage (7), en matériau isolant, notamment un matériau céramique.

22. Plaque d'obturation de robinet-vanne selon la revendication 21, **caractérisée** en ce que les éléments de serrage, notamment les câbles de serrage (7), s'étendent de préférence dans deux directions, perpendiculairement l'une à l'autre, selon un tracé en forme de méandres ou de treillis.

23. Plaque d'obturation de robinet-vanne selon la revendication 21 ou 22, **caractérisée** en ce que les éléments de serrage, notamment les câbles de serrage (7), sont disposés à l'intérieur de l'isolation extérieure (4, 5).

24. Plaque d'obturation de robinet-vanne selon l'une des revendications 1 à 23, **caractérisée** en ce qu'à l'intérieur de l'isolation (5) s'étendant le long de la périphérie extérieure de la plaque d'obturation (10) du robinet-vanne, est disposé un câble de serrage (48), qui assure la cohésion radiale de l'enveloppe d'isolation extérieure.

25. Plaque d'obturation de robinet-vanne selon la revendication 24, **caractérisée** en ce que le câble de serrage (48) est tendu sur des ancrages (49) annulaires ou en Y disposés selon des espacements angulaires environ réguliers le long de la périphérie extérieure de la bande d'étanchéité (1).

26. Plaque d'obturation de robinet-vanne selon l'une des revendications 1 à 25, **caractérisée** en ce que la bande d'étanchéité (1) est également traversée par l'écoulement du fluide de refroidissement, la section libre d'écoulement étant dimensionnée de façon telle, que le fluide de refroidissement s'écoule au travers de la bande d'étanchéité (1), environ avec la même vitesse avec laquelle il s'écoule dans les autres tronçons de canal.
